# EUROPEAN PATENT SPECIFICATION

(11) **EP 1 125 721 B1**
(45) Date of publication and mention of the grant of the patent: **27.07.2005**
(21) Application number: 01300896.6
(22) Date of filing: 31.01.2001
(51) Int. Cl.: B29C 65/00, B29C 65/22

(54) **Electric heat sealer**
Elektrische Heissversiegelungsvorrichtung
Dispositif de soudage électrique

(30) Priority: 01.02.2000 US 495999
(43) Date of publication of application: 22.08.2001
(73) Proprietor: Welcome Company Ltd., Hsi Chih Town, Taipei Hsien (TW)
(72) Inventor: Chou, Shu Hui, c/o Welcome Co., Ltd., Hsi Chih City, Taipei Hsien (TW); Chang, Richard, c/o Welcome Co., Ltd., Hsi Chin City, Taipei Hsien (TW)
(74) Representative: Every, David Aidan

(56) References cited:
- FR-A- 1 257 626
- GB-A- 607 074
- US-A- 5 142 123

## Description

The present invention relates to an electric heat sealer, and more particularly to an electric heat sealer which can be controlled to break the electric circuit when the apparatus is not in use, so as to prevent an electric connection by a false action.

A variety of electric heat sealers have been developed for home use, and have appeared on the market.

Conventional electric heat sealers are functional for sealing plastic bags and the like. However, these electric heat sealers have no safety control means. When an electric heat sealer is touched by an external force, the sealing mechanism may be electrically connected to produce heat, potentially causing an accident to occur.

Another problem with conventional electric heat sealers is that it is often necessary to take two "swipes" at a plastic bag to seal the bag with the sealer. For example, when sealing a bag by swiping from the left to the right, because of the configuration of the sealer, the left most portion of the bag is often left unsealed. It is then necessary to seal the unsealed area by swiping that portion from the right to the left.

A need exists for an electric heat sealer which eliminates the aforesaid problems, and which is handy and safe in use.

GB 607 074 A discloses a sealer for bags that has a pair of relatively movable jaws on each of which is mounted a heated roller. The jaws are connected to one another by a pivot pin and are biased by a toggle lever system.

In accordance with one preferred aspect of the present invention, there is provided an electric heat sealer comprising: (a) a casing, wherein said casing includes a first pair of extensions extending outwardly therefrom; (b) a press bar pivotally connected to said casing, wherein said press bar includes a second pair of extensions extending outwardly therefrom, and wherein said press bar is normally biased above said casing; (c) at least one sealing mechanism mounted in said press bar or said casing, wherein said at least one sealing mechanism includes a heating wire; and (d) a source of current for energizing said heating wire.

The sealing mechanism comprises a heat insulative base; an electric wire; two metal locating plates; and a compression spring. The heat insulative base comprises a protrusive middle portion. The electric heating wire is mounted on the protrusive middle portion of the heat insulative base. The metal locating plates are fixedly fastened to the heat insulative base at two opposite sides and respectively connected to two opposite ends of the electric heating wire. The compression spring is connected between the spring holder and the protrusive middle position of the heat insulative base.

The press bar has a fixed end pivotally connected to one end of the casing and a free and fixedly mounted with a heat insulative press block. The heat insulative press block is forced against the protrusive middle portion of the heat insulative base of the sealing mechanism when the press bar is depressed.

The safety device comprises a safety switch with two opposite terminals. The safety switch has two lead wires respectively extended from the two opposite terminals thereof and respectively connected to the second terminal plate and the second metal contact plate.

In a preferred embodiment, the inventive electric heat sealer further includes a protective frame pivotally connected to the casing and pivotable between a first position and a second position. In the first position, the protective frame is spaced between the heat insulative base of the sealing mechanism and the heat insulative press block of the press bar. In the second position, the protective frame is pivoted out of the space between the base and the press block.

Preferably, the electric heat sealing wire and the press block are covered by heat insulative sheets, which preferably are comprised of a heat-resistant material such as a Teflon mesh.

In another preferred embodiment, the inventive heat sealer further includes a cover device for the casing. The cover device has defined therein an opening through which the protrusive middle portion of the heat insulative base of the sealing mechanism extends out of the casing. More specifically, the cover device includes a front cover plate disposed on a front portion of the casing, a rear cover plate disposed on a rear portion of the casing, and an intermediate cover plate disposed on a middle portion of the casing over the battery chamber.

The cover device covers the casing and has an opening formed therethrough. The first and second metal contact plates are mounted within the casing below the opening in the cover device. The sealing mechanism is mounted in the casing and moves up and down relative to the first and second metal contact plates. The sealing mechanism includes: a heat insulative base having a protrusive middle portion; an electric heating wire mounted on the protrusive middle portion of the heat insulative base, the electric heating wire having two opposite ends; and two metal locating plates mounted on the heat insulative base and respectively connected to the opposite ends of the electric heating wire.

The resilient means biases the sealing mechanism in an upward direction so that the protrusive middle portion of the heat insulative base extends through the opening in the cover device. The operating means is pivotally connected to the casing and extends above the opening in the cover device. The operating means is movable downwardly to engage an object to be sealed which is supported on the protrusive middle portion of the heat insulative base extending through the opening and urge the heat insulative base downwardly and cause the metal locating plates to engage the metal contact plates. This causes electrical current to flow through and heat the electric heating wire when the metal contact plates are connected to a source of electrical current.

The safety device selectively prevents electrical current from flowing through the electric heating wire.

In a preferred embodiment, the inventive heat sealer is adapted to be supplied with electrical current from at least one current source selected from the group consisting of a DC current source and an AC current source. Particularly, the inventive heat sealer is adapted to be supplied with electrical current from both a DC current source and an AC current source.

More particularly, the inventive heat sealer is adapted to be supplied with electrical current from a DC current source which is a battery set. In this embodiment, the casing defines a battery chamber adapted to receive a battery set, the battery chamber including a front upright support; a rear upright support; first and second front terminal plates respectively mounted on the front upright support; a pair of rear terminal plates respectively mounted on the rear upright support; a first metal contact plate mounted on the front upright support and connected to the first front terminal plate; and a second metal contact plate mounted on the front upright support and spaced from the second terminal plate by a gap. The second terminal plate is forced into contact with the second metal contact plate when a battery set is installed in the battery chamber.

Preferably, the safety device includes a safety switch having two opposite terminals and two lead wires respectively extending from the two opposite terminals thereof and respectively connected to the foregoing second terminal plate and the second metal contact plate.

In accordance with yet another aspect of the present invention there is provided a method of sealing comprising the steps of providing an electric heat sealer as defined above, providing an object to be sealed positioning the sealer such that the heating wire extends over an edge of the object to be sealed, and sealing the object to be sealed. In a preferred embodiment, the method also includes the step of causing the sealer to apply an offset force to the object to be sealed, before positioning the sealer across the object to be sealed.

The sealing mechanism may include a heating wire that has at least two sections that are non-parallel to one another.

The sealing mechanism may extend into the extensions. The sealing mechanism may include a heat insulative base, a heating wire secured on the heat insulative base, and a heat resistant cover sheet secured over the heating wire. The heating wire may comprise at least two horizontal sections that are substantially parallel and at least two vertical sections that are substantially parallel. The at least two horizontal sections and the at least two vertical sections are substantially perpendicular to one another. In a preferred embodiment, the heat sealer also includes an actuation button extending downwardly from the press bar. The heating wire is energized when the press bar is pressed downwardly, thereby urging the actuation button upwardly to electrically connect the source of current to the heating wire.

Other objects, features and advantages of the present invention will become apparent to those skilled in the art from the following detailed description. It is to be understood, however, that the detailed description and specific examples, while indicating preferred embodiments of the present invention, are given by way of illustration and not limitation. Many changes and modifications within the scope of the present invention may be made without departing from the spirit thereof, and the invention includes all such modifications.

### Brief Description of the Drawings

The invention may be more readily understood by referring to the accompanying drawings in which
Figure 1 is an exploded view of an electric heat sealer according to the present invention.
Figure 2 is another exploded view of the present invention.
Figure 3 is a perspective view of the present invention when viewed from the front side.
Figure 4 is another perspective rear side view of the present invention when viewed from the rear side.
Figure 5 is a sectional view of the present invention before operation.
Figure 6 is another sectional view of the present invention, showing the press bar pressed down.
Figure 7 is an enlarged view showing a flat metal contact plate and a front terminal plate separated by a gap.
Figure 8 is a circuit diagram showing the connection of an embodiment of a safety device of the invention (a safety switch) to the flat metal contact plate and front terminal plate of Figure 7.
Figure 9 is an environment view showing a heat sealer having an offset sealer portion sealing a plastic bag.
Figure 10 is a front elevational view showing the heat sealer of Figure 9 in an open position.
Figure 11 is a perspective view of the heat sealer of Figure 9.
Figure 12 is a is an environment view showing a heat sealer having an offset sealer portion similar to that of Figure 9, but more ergonomically designed. The sealer is shown sealing a plastic bag.
Figure 13 is a front elevational view showing the heat sealer of Figure 12 in an open position.
Figure 14 is a perspective view of the heat sealer of Figure 12.
Figure 15 is an environment view showing a heat sealer having an offset sealer portion similar to that of Figure 12, but having the press bar pivotally connected to the casing at a neck portion. The sealer is shown sealing a plastic bag.
Figure 16 is a front elevational view showing the heat sealer of Figure 15 in an open position.
Figure 17 is a perspective view of the heat sealer of Figure 15.
Figure 18 is a cross-sectional elevational view taken along line 18--18 of Figure 17, with the frame removed.
Figure 19 is an exploded perspective view of the spring member and heat insulative base used in a preferred embodiment of the present invention.
Figure 20 is a plan view of a heat sealer having two offset sealer portions, in accordance with another embodiment of the present invention.
Figure 21 is a perspective view of a heat sealer that includes extensions for sealing a plastic bag without having to "swipe" the sealer in accordance with an embodiment of the present invention.
Figure 22 is perspective view showing the various components of the heat sealer of Figure 21 disassembled.
Figure 23 is a is a perspective view of the heat sealer of Figure 21 held in an open position to show the spring and actuation button.
Figure 24 is a perspective view of the casing of the heat sealer of Figure 21.
Figure 25 is a is a perspective view of the sealing mechanism of the heat sealer of Figure 21 with the heat resistant cover sheet peeled back to show the heating wire.
Figure 26 is a top plan view of an electric heating wire in accordance with an embodiment of the present invention.
Figure 27 is a perspective view of the components of the electric circuitry of the heat sealer of Figure 21.
Figure 28 is a perspective view of the press bar of the heat sealer of Figure 21 with the cover removed to show the components disposed therein.
Figure 29 is a perspective view of the press bar of the heat sealer of Figure 21 with the cover in place.
Figure 30 is a rear perspective view of the heat sealer of Figure 21 showing the AC power electrical cord exploded therefrom.
Figure 31 is a perspective view of a cord holder in accordance with a preferred embodiment of the present invention.

Like numerals refer to like parts throughout the several views of the drawings.

### Detailed Description of the Preferred Embodiments

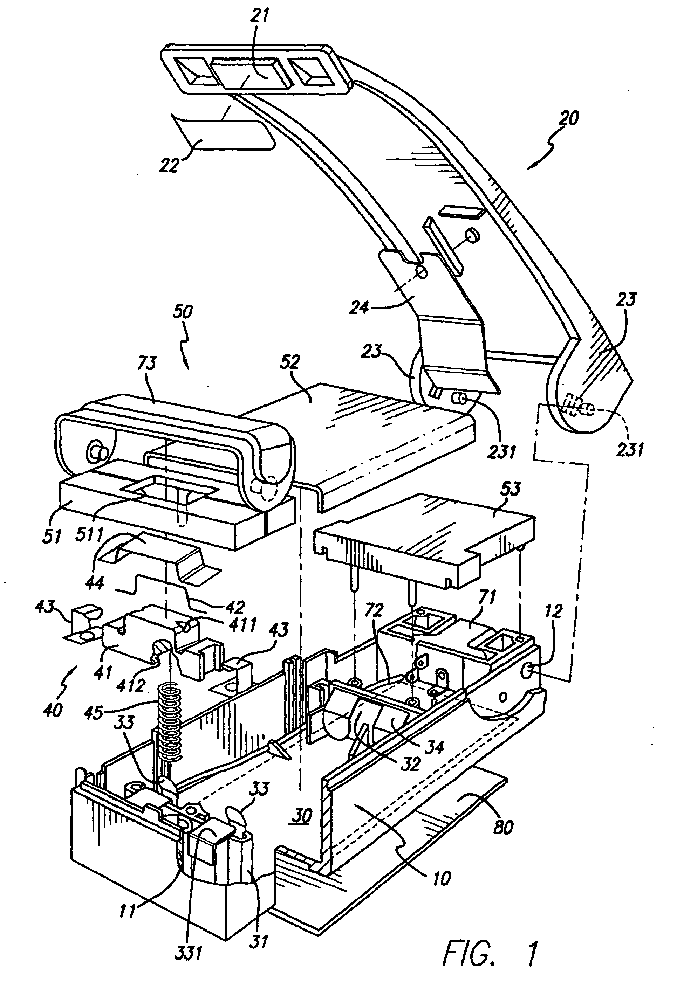

Referring to Figures 1-4 and 7, a first embodiment of an electric heat sealer in accordance with the present invention includes a casing 10, a spring holder 11, a press bar 20, a battery chamber 30, a sealing mechanism 40, and a safety device 70.

It will be appreciated that terms such as "below," "outwardly," "downwardly," "upwardly," "leftmost," "rightmost," "horizontal," and "vertical" used herein are used merely for ease of description and refer to the orientation of the components as shown in the Figures. It should be understood that any orientation of the various embodiments of electric heat sealers and the components thereof described herein is within the scope of the present invention.

The battery chamber 30 is defined within the casing 10. The battery chamber 30 comprises a front upright support 31, a rear upright support 32, a pair of front terminal plates 33 and a rear terminal unit having a pair of rear terminal plates 34 respectively mounted on the front upright support 31 and the rear upright support 32. When battery cells (not shown) are installed in the battery chamber 30, the positive and negative terminals of the battery cells are respectively connected to the metal contact plates 33, 34.

A pair of flat metal contact plates 331 are mounted on the front upright support 31. One flat metal contact plate 331 is directly connected to one front terminal plate 33. Alternatively, the two plates 331 and 31 can form a single unit. The other flat metal contact plate 331 is spaced from the other front terminal plate 33 by a gap 332.

The spring holder 11 is mounted in the front upright support 31 between the flat metal contact plates 331.

The sealing mechanism 40 is mounted within the casing 10, comprising a heat insulative base 41, an electric heating wire 42, two metal locating plates 43, a heat resisting cover sheet 44, and a compression spring 45. The heat insulative base 41 comprises a protrusive middle portion 411. The locating plates 43 are fasted to two opposite sides of the heat insulative base 41 to hold the electric heating wire 42 on the protrusive middle portion 411. The heat resisting cover sheet 44 is covered on the heat insulative base 41 over the electric heating wire 42 to protect the electric heating wire 42. The heat insulative cover sheet 44 preferably is a meshed member, made from a heat-resistant material such as Teflon, providing a smooth surface. The heat insulative base 41 has a bottom mounting hole 412 at the bottom of the protrusive middle portion 411. The bottom mounting hole 412 is preferably a circular hole. The compression spring 45 has a bottom end received in the spring holder 11, and a top end inserted into the bottom mounting hole 412. The diameter of the compression spring 45 fits the circular bottom mounting hole 412 of the heat insulative base 41. Because the sealing mechanism 40 is supported on the compression spring 45, it can be moved up and down in the casing 10 and is biased in the upward direction.

The press bar 20 comprises a heat insulative press block 21 at one end facing the protrusive middle portion 411 of the heat insulative base 41 of the sealing mechanism 40, a heat resisting cover sheet 22 covered on the heat insulative press block 21, and a pair of lugs 23 bilaterally disposed at an opposite end. The lugs 23 have a respective pivot pin 231 at an inner side respectively inserted into two transverse pivot holes 12 at one end of the casing 10. The heat resisting cover sheet 22 of the press bar 20 and the heat resisting cover sheet 44 of the sealing mechanism 40 are preferably made from same material, such as a Teflon mesh. Further, a spring plate 24 is provided between the press bar 20 and the casing 10 to impart an upward bias to the press bar 20. Because of the arrangement of the spring plate 24, the press bar 20 is normally maintained in an upward position to prevent direct contact between the heat resisting cover sheet 22 at the press bar 20 and the heat resisting cover sheet 44 at the sealing mechanism 40.

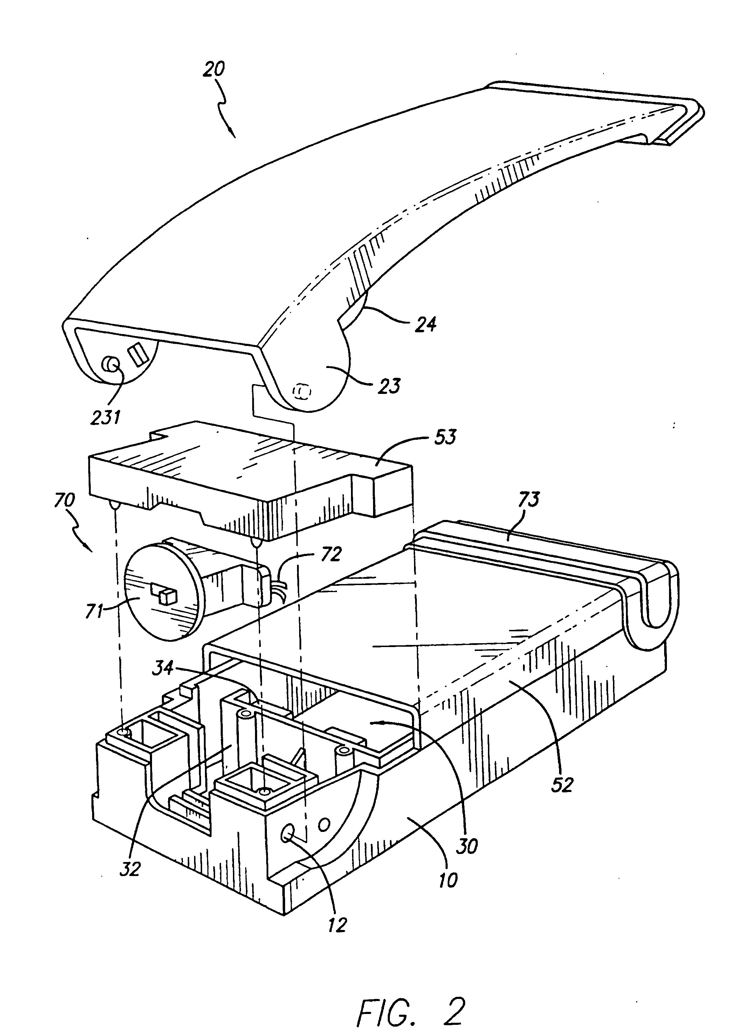

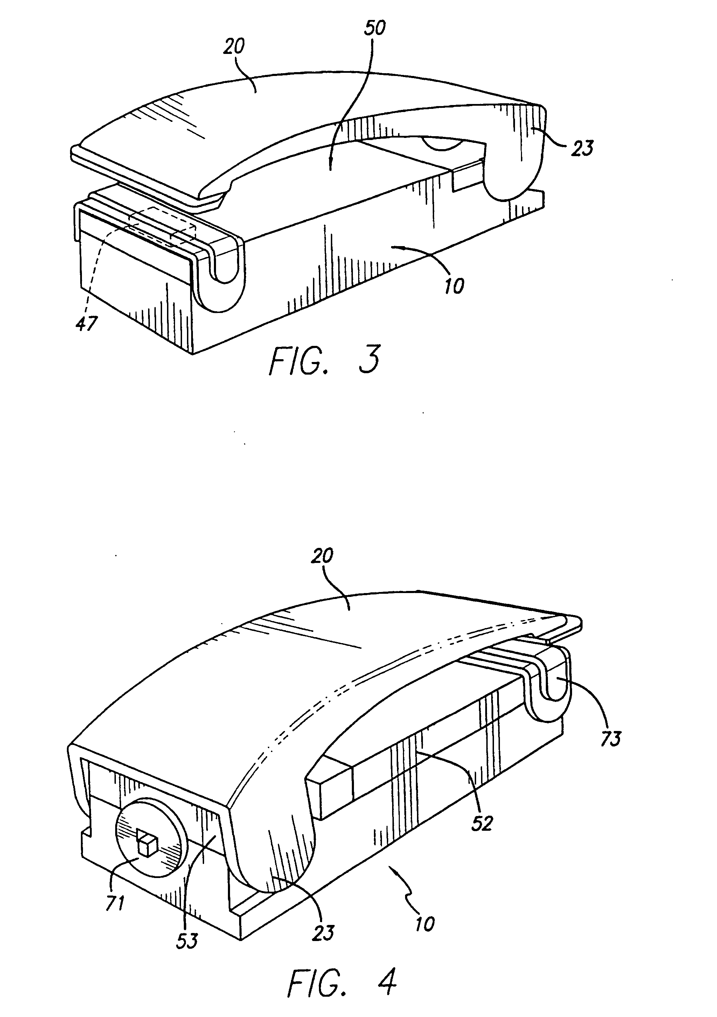

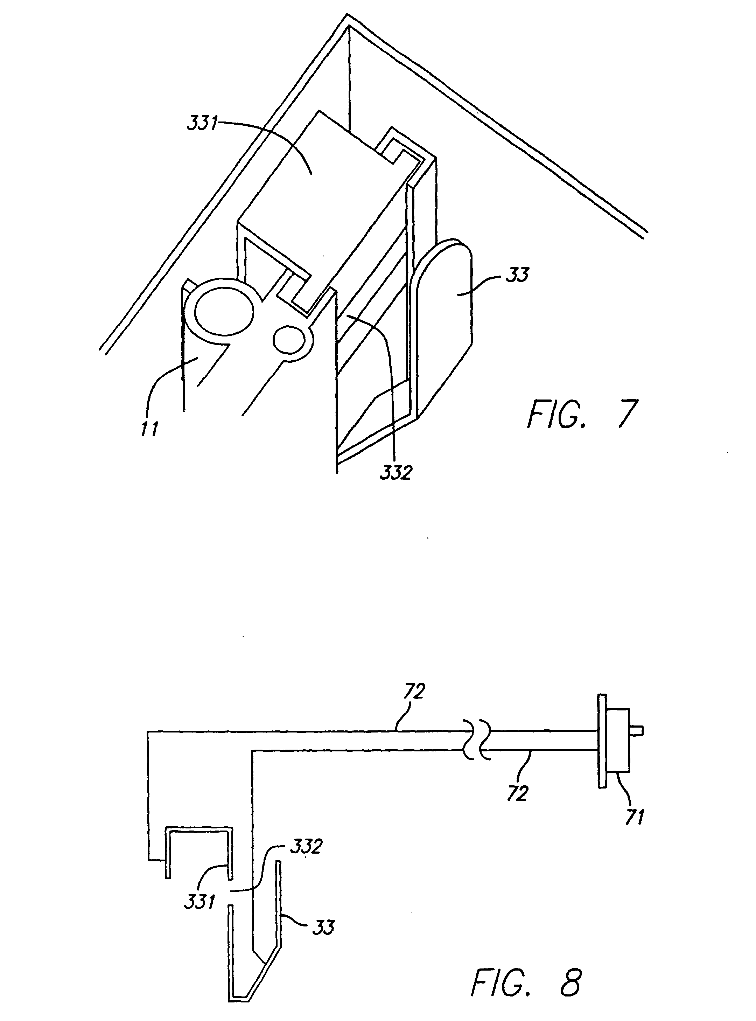

The safety device 70 is for open circuit protection. Safety device 70 preferably includes a safety switch 71 and a protective frame 73. In the particular embodiment illustrated in Figures 2 and 4, the safety switch 71 is mounted in the casing 10 at the rear thereof. Safety device 70 has two lead wires 72 respectively extending from two opposed terminals thereof and respectively connected to one front terminal plate 33 (which is not directly connected to the corresponding flat metal contact plate 331) and one flat metal contact plate 331 (which is not directly connected to the corresponding front terminal plate 33). See Figure 8.

When the electric heat sealer is in use, the safety switch 71 is switched by a user to the "on" position. When the safety switch is in the "on" position, the gap 332 is bridged, enabling current to flow from terminal plate 33 to metal contact plate 331 as shown in Figure 8. When the electric heat sealer is not in use, the safety switch 71 is switched by the user to the "off" position to keep the lead wires 72 in an open circuit state and prevent current from flowing from terminal plate 33 to contact plate 331 in Figure 8. That is, the safety switch is a safety device that is adapted to selectively prevent electrical current from flowing through the electric heating wire. "Selectively" denotes that a user chooses a position which opens or closes the electric circuit and sets the device in the chosen position. The device remains in the selected state until the user changes the state of the device. Safety switch 71 can be a mechanical switch, an electrical device or any other device which permits selective prevention of electrical current flow.

Depressing the press bar 20 against the sealing mechanism 40 does not close the electric circuit when the safety switch 71 is set at the "off" position.

The protective frame 73 is pivotally connected to the casing 10 on the outside of the casing at the same end as the sealing mechanism 40. When the electric heat sealer is not in use, the protective frame 73 is pivoted upwards and retained between the heat insulative block 21 of the press bar 20 and the protrusive middle portion 411 of the heat insulative base 41 of the sealing mechanism 40 to stop the heat insulative block 21 from contacting the sealing mechanism 40. When in use, the protective frame 73 is pivoted outwardly and downwards to a position away from the heat insulative block 21 and the heat insulative base 41. Thus, the protective frame, by virtue of its pivotal motion between the foregoing two positions, is also adapted to selectively prevent electrical current from flowing through the electric heating wire.

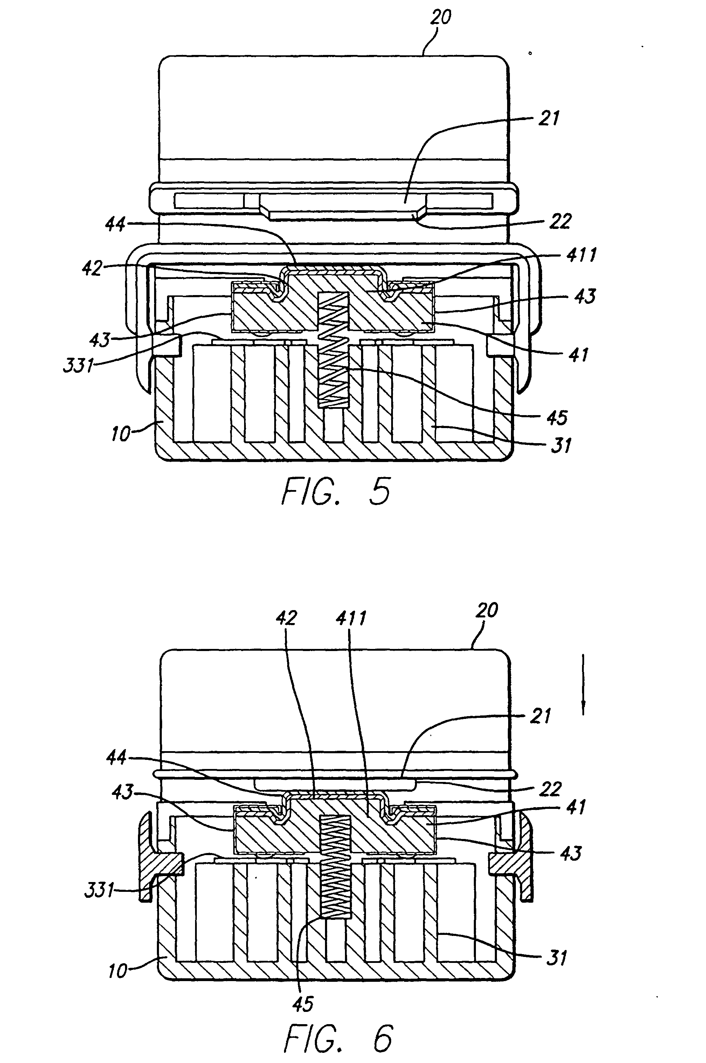

Referring to Figure 5, when the electric heat sealer is not in use, the heat insulative base 41 is biased upward by the compression spring 45 so that the locating plates 43 are spaced from the flat metal contact plates 331 to electrically disconnect the electric heating wire 42 from the battery cells. The safety switch 71 is switched to the "off" position, and the protective frame 73 is pivoted upward to the top side of the casing 10 and retained between the heat insulative press block 21 and the protrusive middle portion 411 of the heat insulative base 41 of the sealing mechanism 40. Therefore the electric heat sealer is deactivated and performs no work.

Referring to Figure 6, when in use, the protective frame 73 is pivoted outwardly and downwards from the position above the protrusive middle portion 411 of the heat insulative base 41 preferably to the front of the casing 10, and the safety switch 71 is switched to the "on" position to electrically connect the lead wires 72. When the press bar 20 is pressed down, the heat insulative press block 21 is forced against the heat insulative base 41. This causes the heat insulative base 41 to be lowered and forces the locating plates 43 into contact with the metal contact plates 331 to close the electrical circuit and heat the electric heating wire 42.

When sealing a workpiece, for example, a plastic bag, the open side of the plastic bag is placed between the protrusive middle portion 411 of the heat insulative base 41 and the heat insulative press block 21. Then the press bar 20 is pressed down to force the locating plates 43 into contact with the metal contact plates 331 respectively. This closes the electrical circuit, thereby causing the electric heating wire 42 to be heated. The open side of the plastic bag is thus melted and sealed by the heat produced by the electric heating wire 42. When the press bar 20 is released from the hand after use, the locating plates 43 are biased upward by the compression spring 45, along with the rest of the heat insulative base 41, from the metal contact plates 331 to open the electric circuit and prevent electrical current from the battery set from flowing through the electric heating wire 42.

In the foregoing embodiment, the inventive safety device includes both safety switch 71 and protective frame 73. If desired, either of these elements can be utilized separately.

Referring to Figure 1 again, a cover device 50 is provided to cover the casing 10. The cover device 50 is comprised of a front cover plate 51, an intermediate cover plate 52, and a rear cover plate 53. The front cover plate 51 covers on the front portion of the casing 10 over the sealing mechanism 40. The intermediate cover plate 52 covers the middle portion of the casing 10 over the battery chamber 30. The rear cover plate 53 covers the rear portion of the casing 10. The front cover plate 51 has defined therethrough an opening 511 through which the protrusive middle portion 411 of the heat insulative base 41 extends.

Alternatively, cover device 50 can be comprised of two plates or can be formed from a single plate. That is, cover plates 51 and 52, 52 and 53, or 51-53 can be replaced with unitary structures.

Referring to Figure 1 again, a magnetic bottom plate 80 is preferably fixedly mounted on the bottom of the casing 10. By means of the magnetic bottom plate 80, the electric heat sealer can be secured to a metal surface, for example a refrigerator door, by magnetic attraction.

Alternative embodiments of the foregoing heat sealer are also included within the scope of the present invention. In one alternative embodiment, the rear terminal unit can be replaced with two separate rear terminal plates 34 separated by a gap, and a safety switch can be connected between the plates 34 (rather than front plated 33 and 331 as described above) while the separated front plates 33 and 331 are placed in contact or form a single element.

In another alternative embodiment, electrical current can be supplied to electric heating wire 42 from an AC power source rather than a DC power source, or from both an AC power source and a DC power source. That is, the electric heat sealer can be adapted to be supplied with electrical current from at least one current source selected from an DC current source and an AC current source (including both DC and AC power sources). Exemplary alternative power sources for an electric heat sealer that can be adapted for use in the present invention are described, for example, in U.S. Patent No. 5,142,123, which is incorporated herein in its entirety by reference. Safety switch 71 is disposed at an appropriate position in the electrical circuit between the electric heating wire and the DC and/or AC current source to selectively prevent current flow to the electric heating wire. Selection of the appropriate location for safety switch 71 in this embodiment is a matter of routine design choice for those skilled in the art.

In another alternative embodiment, the cover device 50 can be disposed on the bottom of the casing 10 rather than on the top of the casing, so that, for example, a battery set can be inserted from the bottom of the electric heat sealer. In this embodiment, if desired a magnetic bottom plate can be affixed to the cover device or a plate thereof if the cover device is comprised of multiple separate plates. In this embodiment an opening through which the protrusive middle portion 411 of the heat insulative base 41 extends is formed in an upper surface of the casing itself rather than in the cover device.

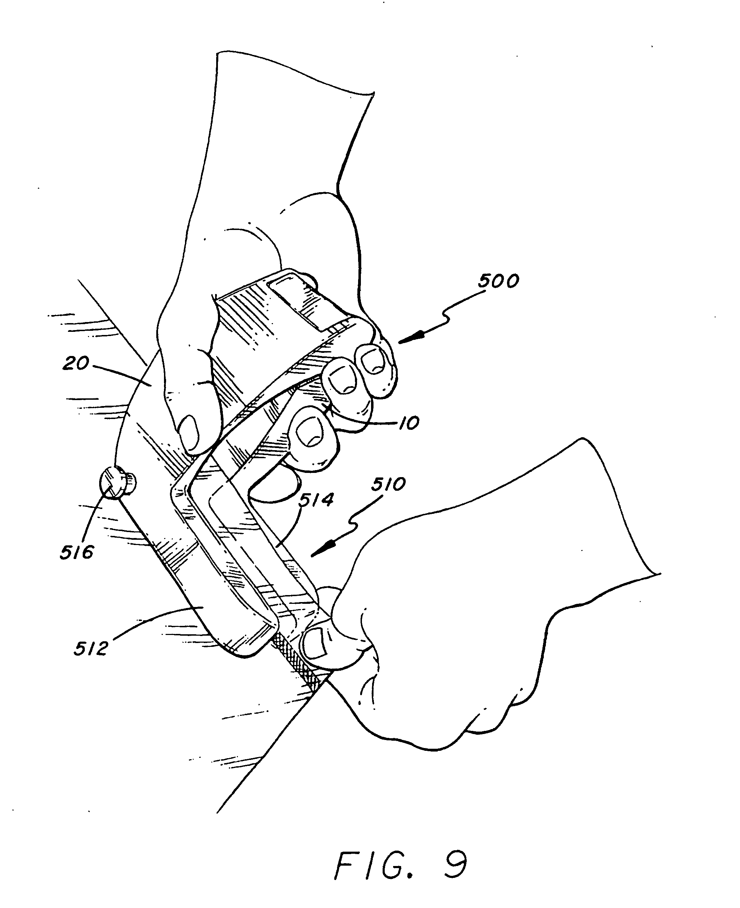

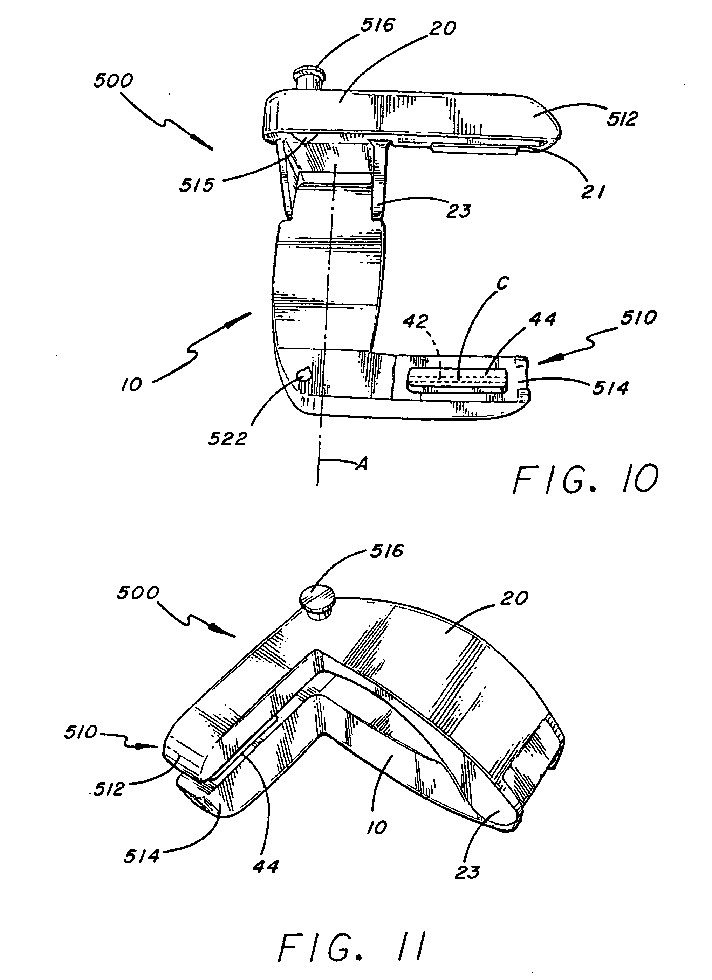

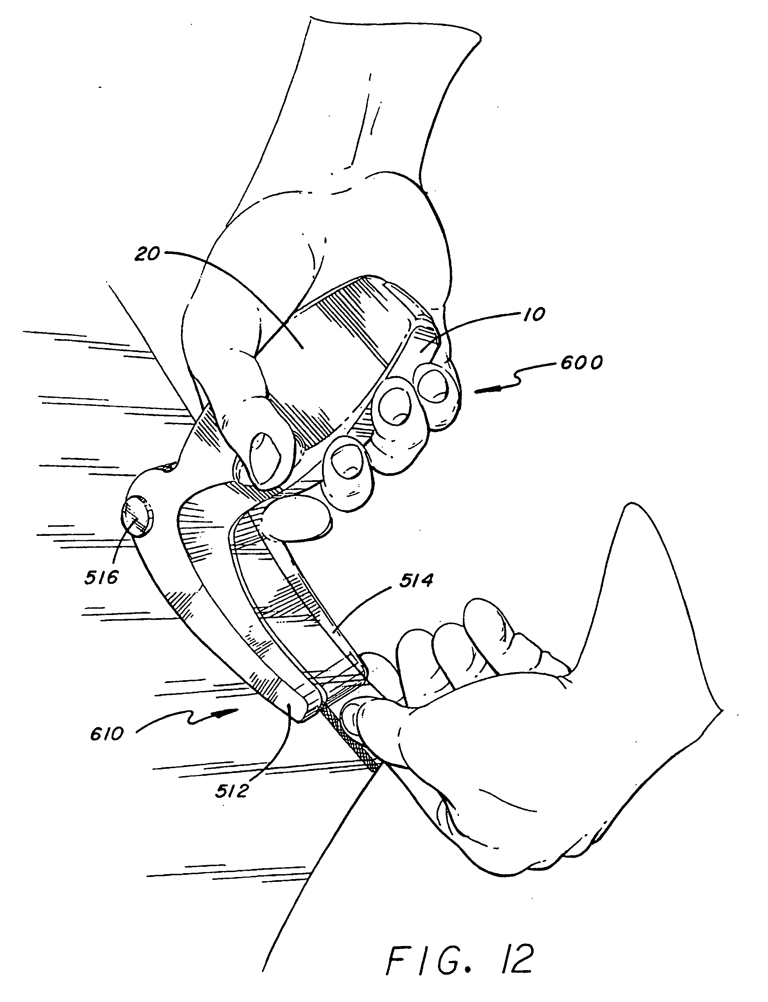

Referring to FIGS. 9-11, an embodiment of an electric heat sealer 500 having an offset sealer portion 510 is shown. As best shown in FIGS. 10 and 11, sealer 500 is similar to those embodiments described above. However, where the above described embodiments included a sealing mechanism 40 and associated components that are aligned with a longitudinal axis defined by casing 10, the center point C of the sealing mechanism 40 (via the offset sealing portion 510) of sealer 500 is offset from the longitudinal axis A defined by casing 10.

An upper member 512 of the offset sealer portion 510 extends from the press bar 20, and a lower member 514 of the offset sealer portion 510 extends from the casing 10. Preferably, the offset sealer portion 510 extends in a direction substantially perpendicular to the longitudinal axis A, however, this is not a limitation on the present invention. The sealing mechanism 40 is disposed in the lower member 514 and preferably extends through an opening defined therein. It will be understood that the offset sealer portion 510 can be any desired length. Therefore, the components of the sealing mechanism 40, such as the heat insulative base 41 and the protrusive middle portion 411 thereof, electric heating wire 42 and the heat resisting cover sheet 44 can be longer than in the above described embodiments. This creates a longer sealing surface, and provides improved sealing capabilities. The heat insulative block 21 (and the heat insulative cover sheet 22) is located on the upper portion 512 and is preferably aligned with the heat insulative base 41 and the heat resisting cover sheet 44, such that when the press bar 20 is pressed, the heat insulative block 21 and the heat resisting cover sheet 44 sandwich the workpiece therebetween. The heat resisting cover sheet 44 can be removed so that the electric heating wire 42 can be replaced.

Preferably, the sealer 500 is activated automatically when the press bar 20 (and upper member 512) is pressed against the sealing mechanism 40, thereby urging the heat insulative base 41 downwardly and closing the circuit as described above. The sealer 500 can also include a safety switch 71 as described above. When the safety switch 71 is at an "off" position, the heating wire 42 cannot be activated even when the circuit is closed by urging the locating plates 43 into contact with the contact plates 331. When the safety switch 71 is in the "on" position, the heating wire 42 is energized when the circuit is closed by urging the locating plates 43 into contact with the contact plates 331. In an alternative embodiment, the electric heating wire 42 can be energized simply by switching safety switch 71 to the "on" position. In this embodiment, the heat insulative base 41 can be stationary, thereby eliminating the need for a spring, locating plates 43 or contact plates 331. Electric current can be supplied to the electric heating wire 42 of the sealer 500 by AC or DC power as described above.

As shown in FIG. 9, the offset portion 510 of the sealer 500 allows a bag to be sealed more easily with a single swipe. Thereby preventing the necessity of a second swipe as described above in the Background of the Invention.

In a preferred embodiment, the sealer 500 can also be used to open a sealed bag. Preferably the sealer 500 includes a slicer 515 that is actuated by a button 516. The button 516 extends through the upper portion 512 and is held in a first position by a spring. When the button 516 is pressed downwardly, the slicer 515, which is located on a bottom side of the upper portion 512, is urged downwardly. The sealer can include a stop plate 522 with which the slicer 515 comes in contact when the button 516 is depressed. To slice a bag or the like using the slicer 515, the user places a bag into position, as shown in FIG. 9, presses the press bar 20 downwardly, and simultaneously presses the button 516, thereby urging the slicer 515 downwardly and into contact with (and slicing through) the bag. The sealer 500 is then pulled across the bag in one motion, thereby slicing the bag open. In a preferred embodiment, the cutting portion of the slicer is made of a ceramic that easily cuts through a plastic bag, but that will not cut human skin. However, the slicer 515 can be made of metal or other cutting material.

It will be understood that other forms of slicers or cutters can be used with the present invention. For example, a safety cutting device such as that taught in co-pending U.S. Application Serial No. 09/141,167, filed August 27, 1998, the entirety of which is incorporated herein by reference, can be used.

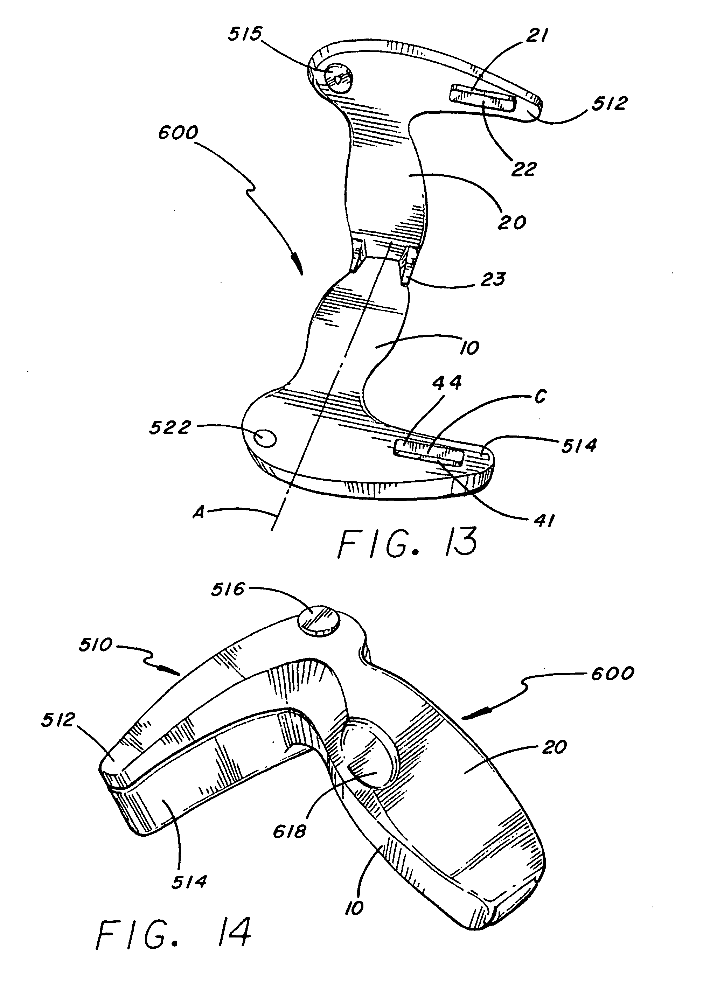

FIGS. 12-17 show two more embodiments of electric heat sealers with an offset sealer portion 515. FIGS. 12-14 show a sealer 600 wherein the press bar 20, casing 10 and offset sealer portion 510 are designed for comfort in the hand of a user. The sealer 600 can be provided with a thumb depression 618 for ease of depressing the press bar 20. The working components of the sealer 600 are similar to those of the above described embodiments.

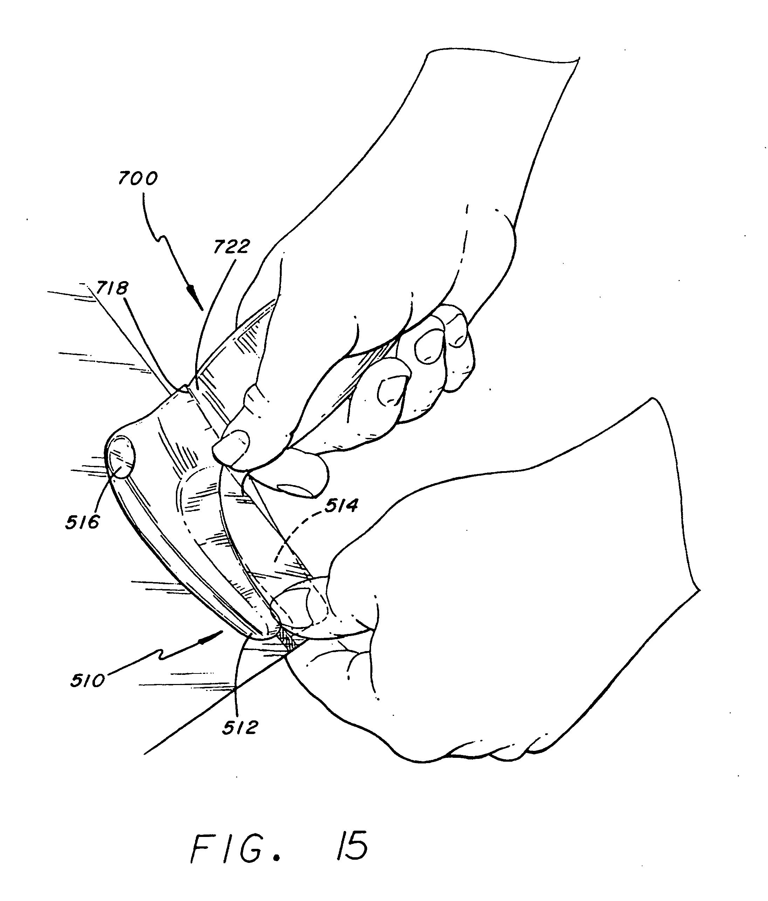

FIGS. 15-17 show another sealer 700 having an offset sealer portion 510. Sealer 700 has a press bar 720 and upper member 512 of the offset sealer portion 510 that are pivotally connected via a hinge 718 to the casing 10 at a neck portion 722 of the casing 10. As can be seen in the figures, the casing 10 acts as a handle. The sealer 700 can also include an LED 724 that indicates when the circuit is opened and closed or that indicates if the battery has power or is "dead." As will be appreciated by those skilled in the art, the above described embodiments of electric heat sealers with offset sealer portions are constructed substantially the same as the sealers described above and shown in FIGS. 1-8, except that the sealing components are offset from the longitudinal axis defined by the main body portion.

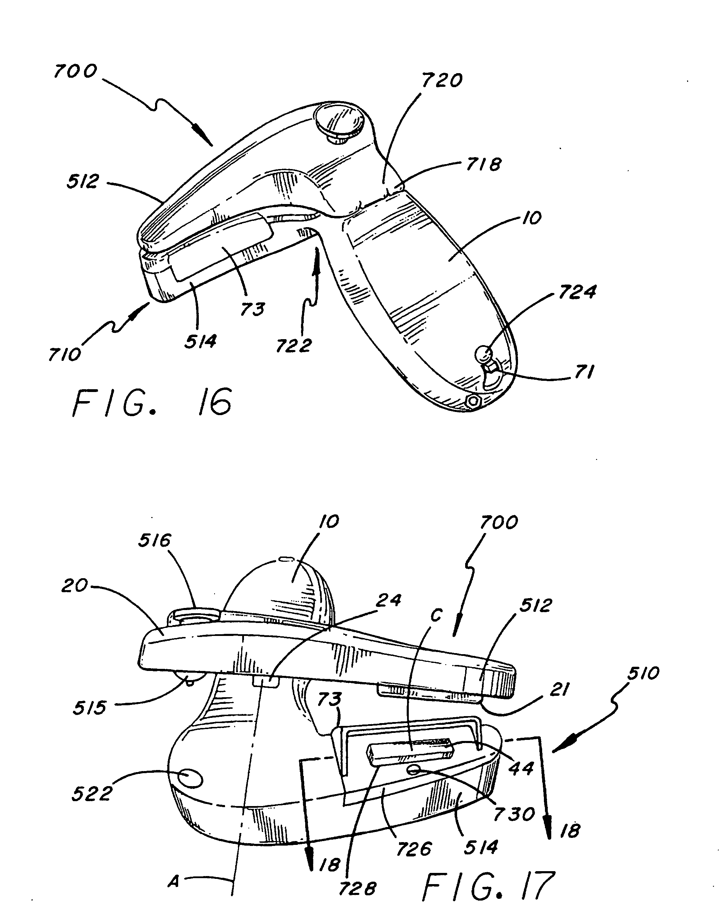

As shown in FIGS 16 and 17, the sealer 700 can also include a protective frame 73 as described above. The protective frame 73 is pivotally connected to the lower member 514, and is pivotable upwardly, as shown in FIG. 17. Preferably, the protective frame 73 is part of a removable frame 726 that is engaged with the lower member 514. Frame 726 has an opening 724 defined therein through which the protrusive portion 411 of the heat insulative base 41 extends when the frame 726 is secured on lower member 514. The frame 726 can be secured on lower member 514 by any known method, for example, by a friction fit, by hooks, snaps, or a screw 730 as shown in FIG. 17. Such a frame for an electric heat sealer is taught in co-pending U.S. Application Serial No. 09/132,687, filed August 12, 1998, the entirety of which is incorporated herein by reference.

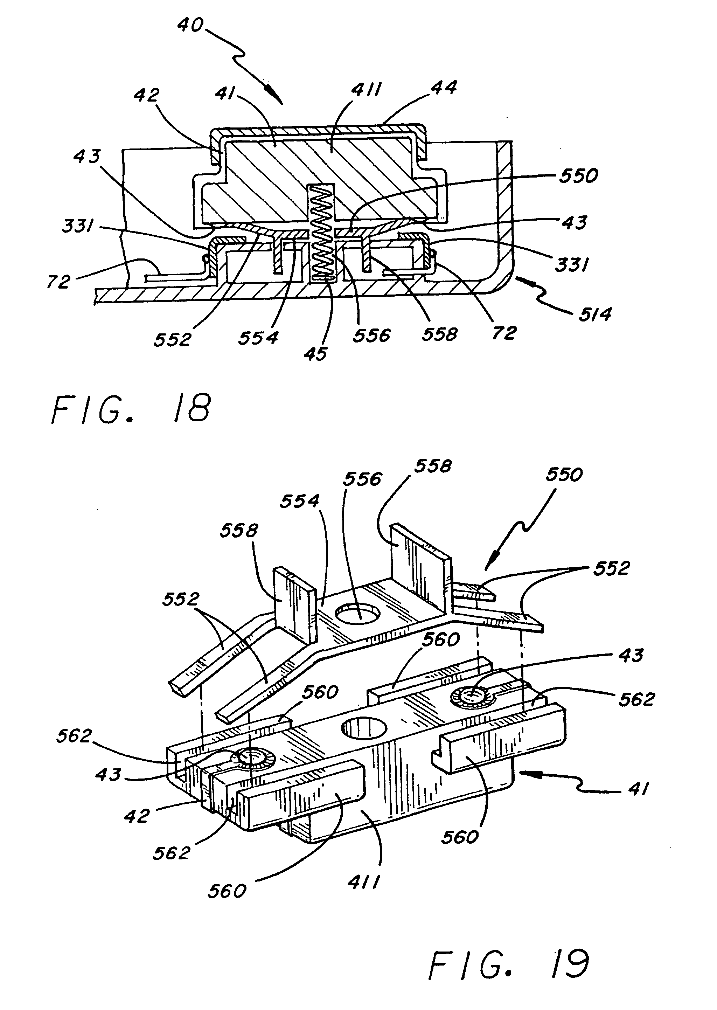

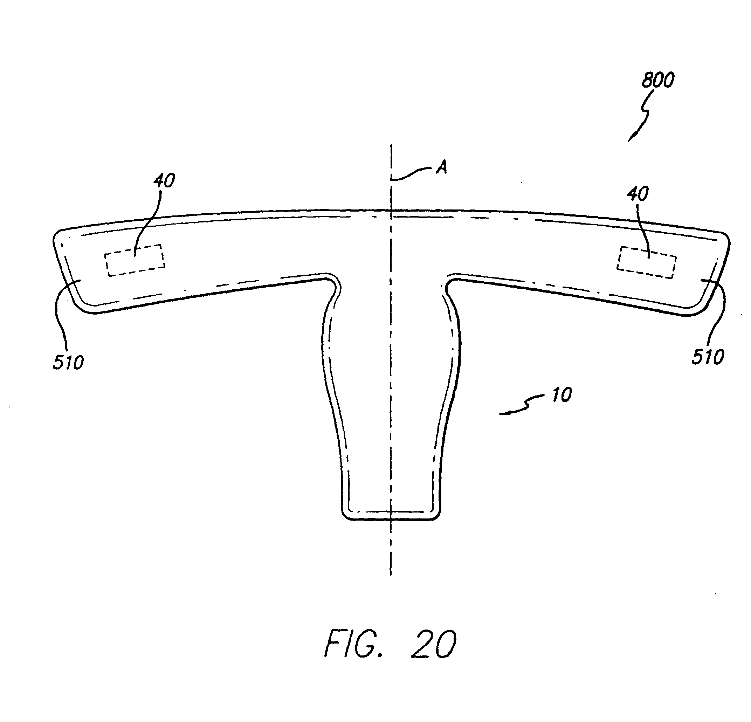

FIG. 18 is a cross-sectional elevational view that shows a sealing mechanism 40 with a spring member 550 disposed in the lower member 514 of a sealer with an offset sealer portion. FIG. 19 shows a heat insulative base 41 and spring member 550 that can be used in a preferred embodiment of the present invention. In FIG. 19, the heat insulative base 41 and spring member 550 are shown upside down from their operative positions. The spring member 550 preferably includes four resilient arms 552 that extend angularly upwardly from a middle section 554. The middle section 554 has an opening defined therein through which a spring 45 can extend. The middle section 554 also has two support members 558 that extend downwardly therefrom, as shown in FIG. 18.

The heat insulative base 41 includes four extension portions 560 that extend from the sides thereof and define channels 562 between themselves and the main body portion 41a of the heat insulative base 41. The arms 552 of the spring member 550 are sized such that they can be received in the four channels 562 of the heat insulative base 41.

When assembled, the support members 558 of the spring member 550 are received in a pair of slots in the base of the lower member 514. The heat insulative base 41 rests on the spring member 550 such that the arms 552 are received in the channels 562, thereby supporting the heat insulative base 41 in a position wherein the locating plates 43 are spaced above the contact plates 331. In an alternative embodiment, the spring member 550 can be omitted and a spring 45 as described above can be used. In operation, the press bar 20 is pressed downwardly, thereby causing heat insulating cover sheet 22 to contact heat insulating cover sheet 44. The heat insulative base 41 is urged downwardly (by spring member 550 flexing), thereby causing the locating plates 43 to contact the contact plates 331 and the circuit to close.

FIG. 20 shows another embodiment of the present invention, wherein an electric heat sealer 800, similar to those described above, includes two offset sealer portions 510, and two sealing mechanisms 40 and associated components. As shown in FIG. 18, both offset sealer portions 510 are offset from the axis A defined by the main body and casing 10 of the sealer 800.

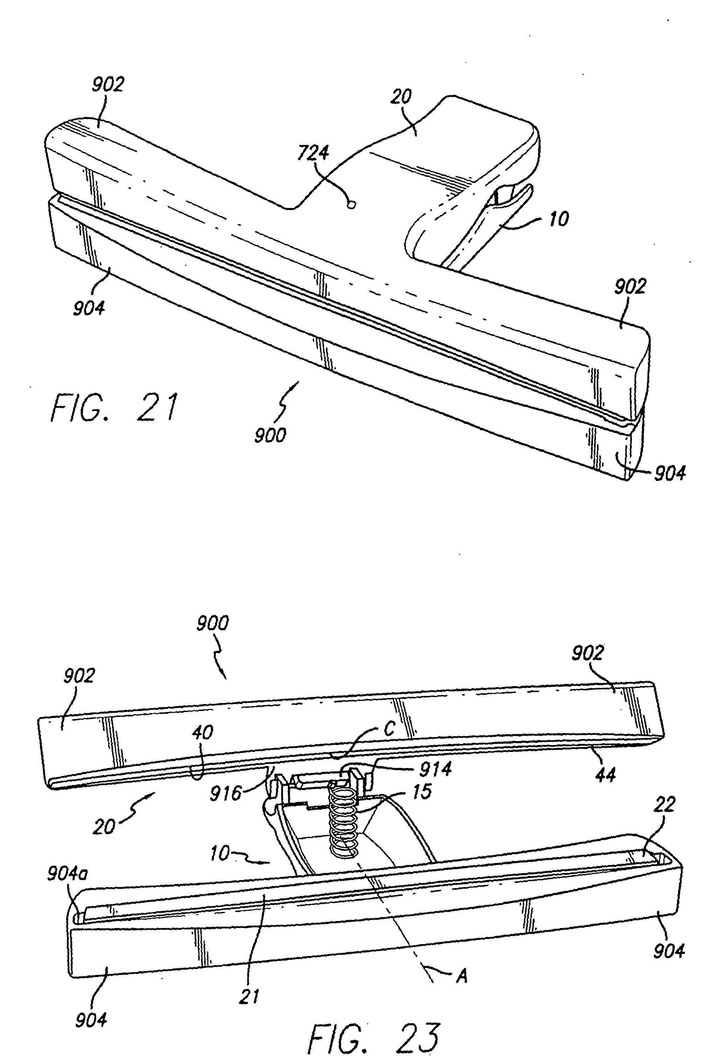

FIGS. 21-31 show yet another embodiment of the present invention. Referring to FIGS. 21-23, in this embodiment, the heat sealer 900 includes a pair of extensions 902 that extend outwardly from the press bar 20, and a pair of extensions 904 that extend outwardly from the casing 10. In a preferred embodiment, the press bar 20 and the extensions 902 house a sealing mechanism 40. It will be understood that the sealing mechanism 40 can also be disposed in the casing and the extensions 904 thereof. In this embodiment, the center point C of the sealing mechanism 40 is aligned with the longitudinal axis A defined by the press bar 20 and casing 10.

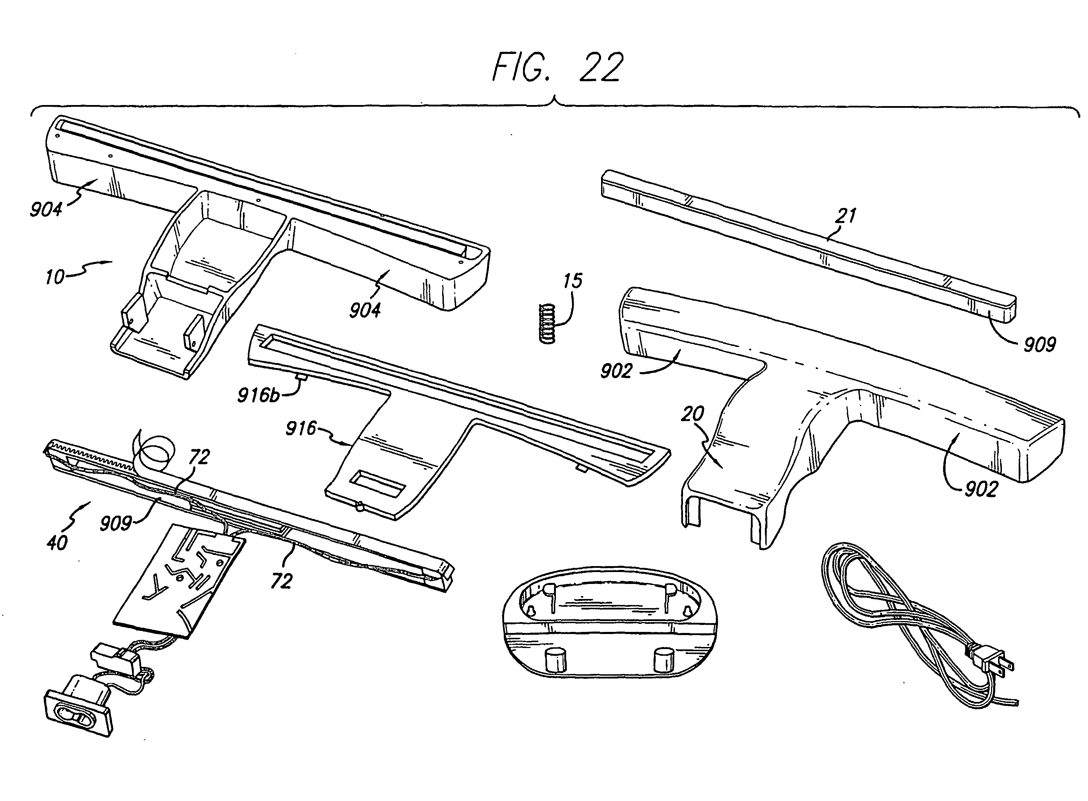

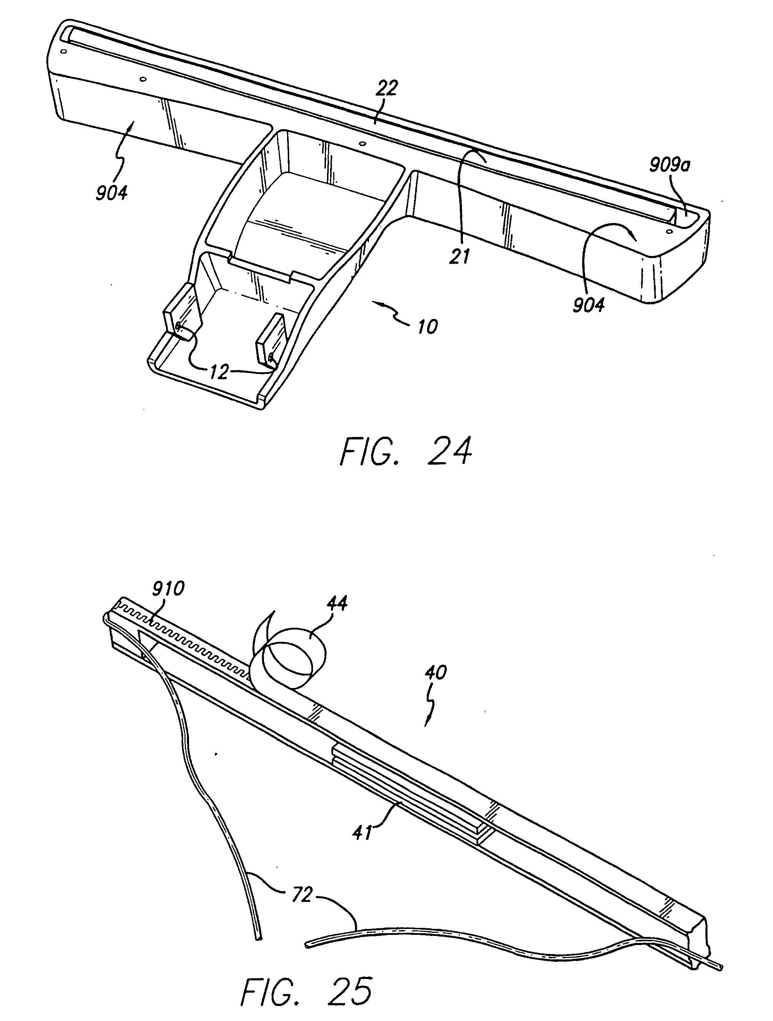

As shown in FIGS. 22 and 24, the casing 10 includes a heat insulative press block 21 at one end facing the sealing mechanism 40 of the press bar 20. Preferably, the heat insulative press block 21 is covered by a heat resistant cover sheet 22. In a preferred embodiment, the heat insulative press block 21 is secured to a riser 909 that is disposed in the opening 904a in the casing 10/extensions 904.

Referring to FIGS. 25-27, the sealing mechanism 40 includes a heat insulative base 41, a heating wire 910, a heat resistant cover sheet 44 and a pair of two metal locating plates or clips 43. In a preferred embodiment, the sealing mechanism 40 includes a riser 909 to which the heat insulative base 41 is secured. The riser 909 is disposed in opening 902a in the press bar 20/extensions 902. The heating wire 910 is disposed on the bottom surface of the heat insulative base 41, and the heat resistant cover sheet 44 covers the heating wire 910. In another embodiment, a second heat resistant cover sheet 44 may be placed under the heating wire 910 and on top of the heat insulative base 41. The clips 43 are clipped onto the opposite ends of the heat insulative base 41 and hold the heating wire 910 and heat resistant cover sheet 44. The heat insulative base 41 may include a pair of notches adjacent the ends thereof, for receiving a portion of the clips 43. In another embodiment, the clips 43 and/or the heating wire 910 can be secured in place by metal screws 911 or other metal elements. Electrical leads can be electrically connected to the screws 911 or other element, which are electrically connected to the clips and/or the heating wire 910. It will be understood that any method of securing the ends of the wire 910 and the heat resistant cover sheet 44 and including the wire 910 as part of the circuit is within the scope of the present invention.

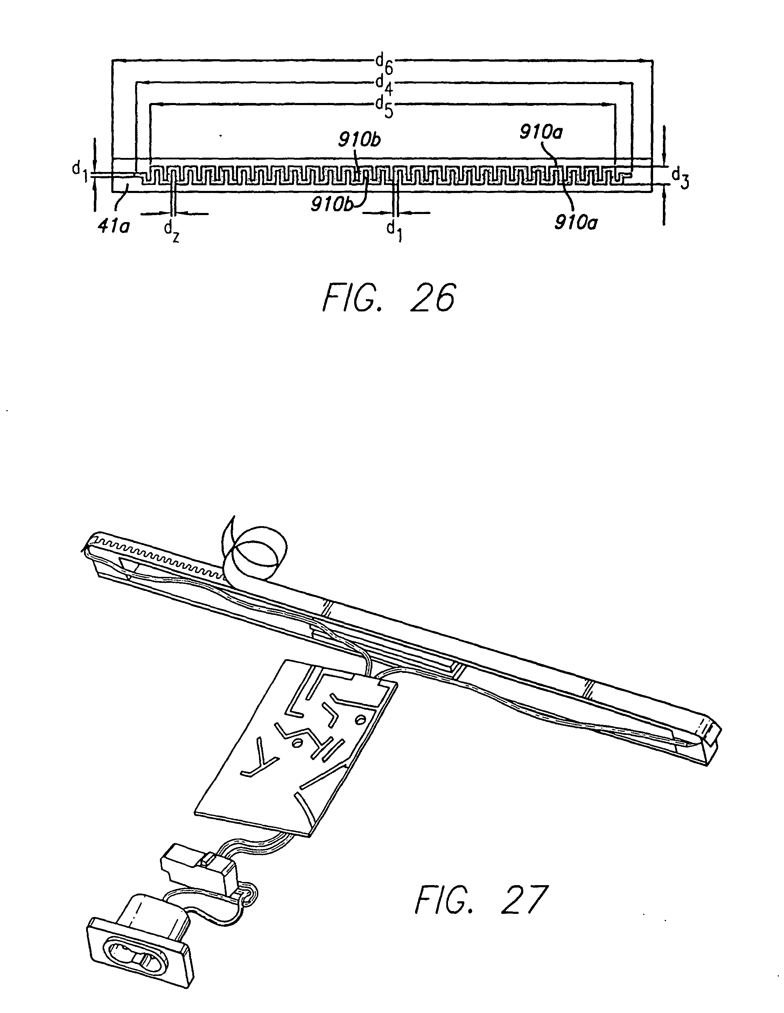

In this embodiment, the heating wire 910 preferably has a shape such as that shown in FIG. 26. In this shape, the heating wire 910 includes a plurality of substantially parallel horizontal sections 910a and a plurality of substantially parallel vertical sections 910b. In a preferred embodiment, the heating wire 910 is cut from a sheet of the preferred metal. The heating wire 910 can be made of any metal. As shown in FIG. 26, the actual heating wire 910 has a width d₁; the vertical sections define a space d₂ therebetween; the overall thickness of the heating wire configuration (from the outside edge of one parallel horizontal section to another) has a width d₃; the heating wire configuration has an overall length d₄ and a length from the outside edge of the leftmost vertical section to the outer edge of the rightmost vertical section of d₅. It will be understood that heating wire configuration refers to the heating wire 910 in the shape shown in FIG. 26 including the substantially parallel horizontal sections 910a and the substantially parallel vertical sections 910b. In a preferred embodiment, d₁ is approximately .5 mm, d₂ is approximately .2 mm, d₃ is approximately 2 mm, d₄ is approximately 230 mm, and d₅ is approximately 210 mm. It will be understood that these dimensions are merely exemplary and are not intended to be a limitation on the present invention.

With such a heating wire configuration, the entire heating wire 910 can be longer than if the heating wire was configured in a straight orientation across the heat insulative base 41, as in the above described embodiments. It will be understood that the heating wire 910 is shaped in such a configuration so that the overall length of the heating wire 910 when straight d₇ is greater than the length d₆ of the heat insulative base 41, (as shown in FIG. 26). In other words, for the portion of the heating wire 910 that is disposed on the top surface 41 a of the heat insulative base 41 (the sealing portion of the heating wire 910), d₇ > d₆. Prior heat sealers had a heating wire that was straight and that ran perpendicular to the longitudinal axis defined by the casing. Prior heat sealers also had a heating wire that wrapped around the ends of the heat insulative base, however, the sealing portion of the heating wire that is located on the top surface of the heat insulative base was less than or equal to the length of the heat insulative base. With the heating wire configuration of the present embodiment, portions of the heating wire are disposed non-perpendicular to the longitudinal axis defined by the casing A. As shown in FIG. 26, preferably, portions of the heating wire 910 are disposed substantially parallel to the longitudinal axis defined by the casing A.

In a preferred embodiment, the wire has a resistance of approximately 25 ohms. However, this is not a limitation on the present invention. Because the heating wire configuration is wider than wires on prior electric heat sealers, a lower resistance and therefore less power can be used. Typical prior art heat sealers used a heating wire that had a resistance of 5 ohms. This provides for a more efficient burn and it provides for longer battery life when the sealer is used in DC mode.

The shape of the heating wire 910 provides a wider heating surface compared to prior sealers. The seal provided by the wider heating surface is generally a stronger seal.

Preferably, the extensions 902, 904 extend in a direction substantially perpendicular to the longitudinal axis A, however, this is not a limitation on the present invention. The sealing mechanism 40 is disposed in the press bar 20 and the extensions 902 in opening 902a, and extends through opening 916a in the cover 916. In another embodiment, the sealing mechanism 40 can be disposed on the bottom in the case 10. In yet another embodiment, the press bar 20 and case 10 can both include a sealing mechanism 40.

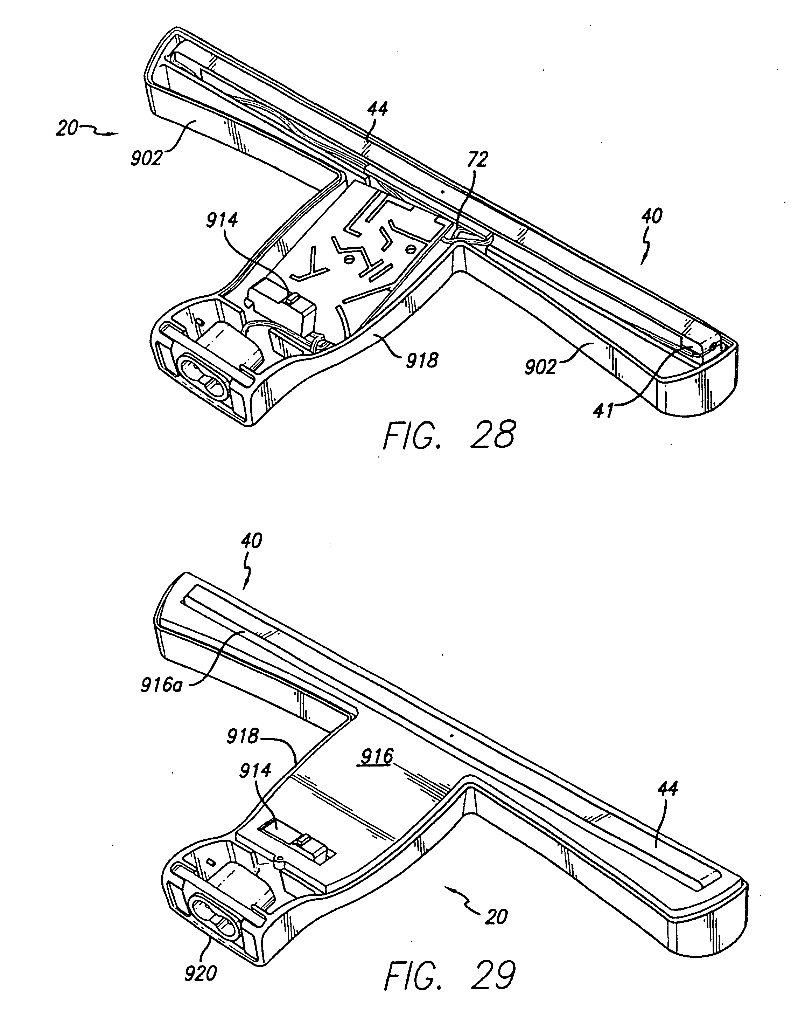

Referring to FIGS. 28 and 29, the press bar 20 includes an actuation button 914 that is biased downwardly therefrom. When the press bar 20 is moved downwardly the actuation button 914 contacts the casing 10, thereby urging the actuation button 14 upwardly and closing the circuit. The actuation button 914 is preferably located toward the center of the press bar, as shown in FIG. 28, however this is not a limitation on the present invention.

The press bar 20 includes a pair of lugs 23 on the inner surface of the housing portion 918 that are inserted into two transverse pivot holes 12 at one end of the casing 10. As shown in FIG. 23, the casing 10 includes a spring 915 extending upwardly therefrom to impart an upward bias to the press bar 20. Because of the arrangement of the spring 15, the press bar 20 is normally maintained in an upward position to prevent direct contact between the heat resisting cover sheet 44 of the sealing mechanism 40 and the heat resisting cover sheet 22 of the casing 10.

When the heat sealer 900 is placed on a surface, and is at rest, the press bar 20 rests on and is biased upwardly by the spring 915. To close the circuit, the urging of the spring 915 must be overcome by pressing the press bar downwardly until the actuation button 914 contacts the casing 10. It will be understood that if the sealing mechanism 40 is in the casing 10, the placement of the spring 915, circuitry, actuation button 914, etc. will be reversed from the embodiment described above.

Referring again to FIGS. 28 and 29, the press bar 20 is preferably made of two separate pieces that are preferably formed by a molding process, a cover 916 and a housing portion 918. The cover 916 and the housing portion 918 can be secured together by any known method, such as by gluing, fastening, etc. Preferably, the cover includes clips 916b that secure the cover 916 to the housing portion 918. The portion of the cover 916 that forms part of the extensions 902 includes an opening 916a therein, through which a portion of the sealing mechanism 40 extends.

The housing portion 918 of the press bar 20 houses the electronic circuitry as shown in FIG. 28. Electric lead wires 72 extend from the circuitry to the sealing mechanism 40 to electrically connect the opposite ends of the heating wire 910 to the electric circuitry, thereby making the heating wire 910 a part of the circuit.

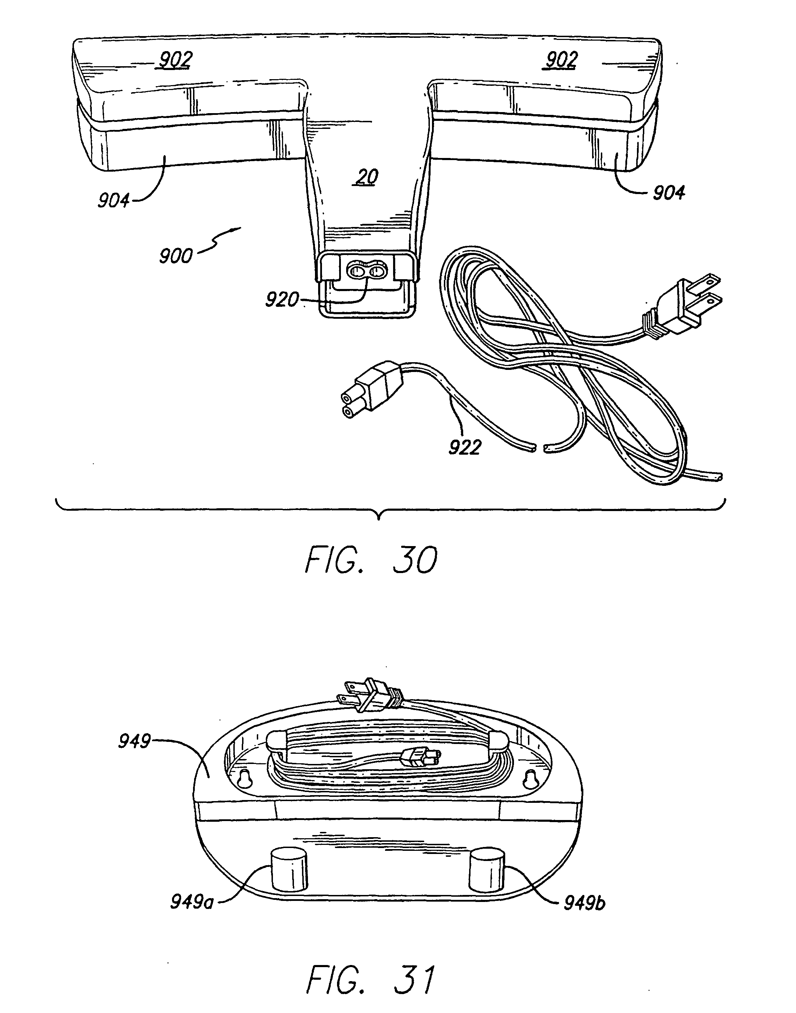

As is shown in FIG. 30, the sealer 900 includes a socket 920 for receiving a cord 922 to electrically connect the sealer 900 with an AC power source. The cord 922 is adapted to be plugged in to a typical wall outlet, thereby providing 120 V at 60 Hz to the sealer 900.

It will be understood that the extensions 902 (and 904) can be any desired length. Preferably, the extensions 902 (and 904) extend outwardly far enough to be able to accept (and subsequently seal) a standard sized plastic bag without having to "swipe" the sealer or the bag. The sealing of a plastic bag will be described more fully herein below.

The Sealer 900 generally operates as follows: The Press Bar, is depressed, thereby causing the actuation button, thereby activating the electric circuit. Activation of the electric circuit causes the heating wire to keep for a short period of time, typically one to two seconds, thereby sealing the plastic bag of the like. The electric circuit is designed to cause the heating wire to be heated for a predetermined amount of time.

It will be further understood that certain components of the various embodiments set forth above can be interchangeably used on the sealer 900. For example, the heat insulative base 41 can include a protrusive middle portion; the sealer 900 can include a cutter for slicing open sealed plastic bags; the sealer can operate on both AC and DC; the sealing mechanism 40 may be spring biased such that pressing down on the sealing mechanism 40 causes the circuit to be closed, thereby energizing the heating wire 910. The sealing mechanism can be secured in place using a frame, such that the heat resistant cover sheet 44 is easily replaceable.

Figure 31 shows a cord storage device 949. The cord can be wrapped around the posts 949a, 949b of the device, and then the storage device 949 can be hanged on the wall. The sealer 900 can then be hanged on the storage device 949.

The sealer 900 can also include an LED 724, similar to that described above, that indicates when the circuit is opened and closed or that indicates if the battery has power or is "dead." As will be appreciated by those skilled in the art, the above described embodiments of electric heat sealer 900 are constructed substantially the same as the sealers described above and shown in FIGS. 1-20, except that the sealing mechanism 40 extends into the extensions 902 or 904. Those skilled in the art will be able to make numerous modifications to sealer 900 on the basis of the description of the other embodiments described herein. All such embodiments are within the scope of the present invention.

Figure 31 shows a cord storage device 949. The cord can be wrapped around the posts of the storage device 949 and then the device 949 can be hanged on the wall. The sealer 900 can be attached to the storage device 949 for storage purposes.

Preferably, the sealer 900 is activated automatically when the press bar 20 is pressed downwardly such that the actuation button 914 contacts the casing 10 and closes the circuit as described above. The sealer 900 can also include a safety switch 71 as described above. When the safety switch 71 is at an "off" position, the heating wire 910 cannot be activated even when the circuit is closed by pressing down the press bar as described above. When the safety switch 71 is in the "on" position, the heating wire 910 is energized when the circuit is closed by urging the actuation button 914 into a closed position. In an alternative embodiment, the electric heating wire 910 can be energized simply by switching safety switch 71 to the "on" position. In this embodiment, actuation button 914 can be omitted. Electric current can be supplied to the electric heating wire 910 of the sealer 900 by AC or DC power as described above.

The embodiments of the present invention recited herein are intended to be merely exemplary and those skilled in the art will be able to make numerous modifications to them without departing from the scope of the present invention as defined in the appended claims. For example, the sealing mechanism, and in particular, the electric heating wire can be shortened to provide a longer battery life. In this alternative embodiment, the electric heating wire can be less than 1.0" in length. Preferably, the electric heating wire is less than 0.75" in length, and more preferably the electric heating wire is less than 0.50" in length. The shorter the electric heating wire is, the longer the batteries will last. The electric heating wire can be made of a non-ferrous material, such as copper or any other type of material to improve battery life. All such modifications are intended to be within the scope of the present invention as defined by the claims appended hereto.

## Claims

1. An electric heat sealer comprising
(a) a casing (10), wherein said casing includes a first pair of extensions (510, 904) extending outwardly therefrom,
(b) a press bar (20) pivotally connected to said casing, wherein said press bar includes a second pair of extensions (510, 902) extending outwardly therefrom, and wherein said press bar is normally biased above said casing,
(c) at least one sealing mechanism (40) mounted in said press bar or said casing, wherein said at least one sealing mechanism includes a heating wire (42; 910) and
(d) a source of current for energizing said heating wire.

2. The electric heat sealer of claim 1 wherein said sealing mechanism (40) is disposed in said press bar (20).

3. The electric heat sealer of claim 1 wherein said sealing mechanism (40) is disposed in said casing (10).

4. The electric heat sealer of claim 1 wherein a first sealing mechanism is disposed in said press bar (20), and a second sealing mechanism is disposed in said casing (10).

5. The electric heat sealer of claim 1 which is adapted to be supplied with electrical current from at least one current source selected from the group consisting of a DC current source and an AC current source.

6. The electric heat sealer of claim 1 wherein said casing (10) defines a longitudinal axis, and wherein at least a portion of said heating wire (42; 910) is oriented non-perpendicularly to said longitudinal axis.

7. The electric heat sealer of claim 1 wherein said casing (10) defines a longitudinal axis, and wherein at least a portion of said heating wire (42; 910) is oriented substantially parallel to said longitudinal axis.

8. The electric heat sealer of claim 1 wherein said heating wire (42; 910) includes at least two sections that are not parallel to one another.

9. The electric heat sealer of claim 1 wherein said heating wire (42; 910) includes at least two sections that are substantially perpendicular to one another.

10. The electric heat sealer of claim 1 wherein said sealing mechanism (40) further includes a heat insulative base (41) having a top surface on which said heating wire (42; 910) is disposed, wherein the portion of said heating wire (42; 910) disposed on said top surface is longer than the length of said top surface.

11. The electric heat sealer of claim 1 wherein said extensions (510; 904) extend in substantially opposite directions.

12. The electric heat sealer of claim 11 wherein said casing (10) defines a longitudinal axis, and wherein said extensions extend (510; 904) in a direction substantially parallel to said longitudinal axis.

13. The electric heat sealer of claim 1 further comprising an actuation button (914), wherein said source of current is electrically connected to said heating wire (42; 910) when said actuation button is depressed.

14. The electric heat sealer of claim 13 wherein said actuation button (914) is located in a position such that it is depressed when the press bar (20) is pressed downwardly.

15. The electric heat sealer of claim 1 wherein said sealing mechanism (40) is movable up and down to electrically connect said source of current to said heating wire (42; 910).

16. The electric heat sealer of claim 1 wherein said sealing mechanism (40) extends into said first or second pair of extensions (510; 904).

17. The electric heat sealer of claim 1 wherein said heating wire (42; 910) comprises at least two horizontal sections (910a) that are substantially parallel and at least two vertical sections (910b) that are substantially parallel, and wherein said at least two horizontal sections and said at least two vertical sections are substantially perpendicular to one another.

18. The electric heat sealer of claim 17 wherein said casing (10) defines a longitudinal axis, and wherein at least one of said at least two horizontal or vertical sections (910a, 910b) of said heating wire (910) is oriented non-perpendicularly to said longitudinal axis.

19. The electric heat sealer of claim 17 wherein said casing defines a longitudinal axis, and wherein at least one of said at least two horizontal or vertical sections (910a, 910b) of said heating wire (910) is oriented substantially parallel to said longitudinal axis.

20. An electric heat searer according to any preceding claim, wherein said first extensions (510, 904) extend in opposite directions, and said second extensions (510, 902) extend in opposite directions, and wherein said sealing mechanism further includes
(i) a heat insulative base, said heating wire being secured on said heat insulative base, and
(ii) a heat resistant cover sheet secured over said heating wire.

21. An electric heat sealer according to claim 1 wherein the casing (10) has a longitudinal axis, and the sealing mechanism (40) has a center point, wherein said center point is offset from said longitudinal axis.

22. The electric heat sealer according to any preceding claim, further comprising a safety device (71) which selectively prevents electrical current from flowing through said electric heating wire (42; 910).

23. The electric heat sealer of claim 22 wherein said safety device comprises a safety switch (7) arranged in series with said electric heating wire (42; 910).

24. The electric heat sealer of claim 1 wherein said press bar (20) has a fixed end pivotally connected to said casing and a free end on which is mounted a heat insulative press block (21), said heat insulative press block (21) being forced against said heat insulative base (41) when said press bar is depressed.

25. The electric heat sealer of claim 24 further comprising a device (73) attached to said casing (10) for preventing contact between said press bar (20) and said sealing mechanism (40).

26. The electric heat sealer of claim 1 wherein said sealing mechanism (40) is movable up and down.

27. The electric heat sealer of claim 1 wherein said sealing mechanism (40) further comprises:
(a) a heat insulative base (41), and
(b) two metal locating plates (43),
said heat insulative base comprising a protrusive middle portion (44), said electric heating wire (42) being mounted on said protrusive middle portion of said heat insulative base (41), said metal locating plates (43) being fastened to said heat insulative base at two opposite sides thereof and respectively connected to two opposite ends of said electric heating wire.

28. The electric heat sealer of claim 27 wherein said sealing mechanism further comprises a heat insulative sheet (44) covered on said electric heating wire (42).

29. The sealer of claim 1 further comprising a device for cutting a workpiece.

30. The sealer of claim 29, wherein said device for cutting said workpiece is located on said press bar.

31. The sealer of claim 30 wherein said device for cutting said workpiece comprises a button in cooperation with a slicer.

32. The sealer of claim 31 wherein said slicer is comprised of ceramic.

33. A method of sealing comprising the steps of:
(a) providing an electric heat sealer according to any preceding claim,
(b) providing an object to be sealed
(c) positioning said sealer such that said heating wire extends over an edge of said object to be sealed, and
(d) sealing said object to be sealed.

## Patentansprüche

1. Elektrische Heißsiegelvorrichtung, die folgendes umfaßt:
(a) ein Gehäuse (10), wobei das Gehäuse ein erstes Paar von Erweiterungen (510; 904) einschließt, die sich von demselben nach außen erstrecken,
(b) einen schwenkbar mit dem Gehäuse verbundenen Druckhebel (20), wobei der Druckhebel ein zweites Paar von Erweiterungen (510, 902) einschließt, die sich von demselben nach außen erstrecken, und wobei der Druckhebel normalerweise nach oberhalb des Gehäuses Vorgespannt wird,
(c) wenigstens einen in dem Druckhebel oder dem Gehäuse angeordneten Siegelmechanismus (40), wobei der wenigstens eine Siegelmechanismus einen Heizdraht (42; 910) einschließt, und
(d) eine Stromquelle, um den Heizdraht zu speisen.

2. Elektrische Heißsiegelvorrichtung nach Anspruch 1, bei welcher der Siegelmechanismus (40) in dem Druckhebel (20) angeordnet wird.

3. Elektrische Heißsiegelvorrichtung nach Anspruch 1, bei welcher der Siegelmechanismus (40) in dem Gehäuse (10) angeordnet wird.

4. Elektrische Heißsiegelvorrichtung nach Anspruch 1, bei der ein erster Siegelmechanismus in dem Druckhebel (20) angeordnet wird und ein zweiter Siegelmechanismus in dem Gehäuse (10) angeordnet wird.

5. Elektrische Heißsiegelvorrichtung nach Anspruch 1, die dafür geeignet ist, mit elektrischem Strom von wenigstens einer Stromquelle gespeist zu werden, ausgewählt aus der Gruppe, die aus einer Gleichstromquelle und einer Wechselstromquelle besteht.

6. Elektrische Heißsiegelvorrichtung nach Anspruch 1, bei der das Gehäuse (10) eine Längsachse definiert und bei der wenigstens ein Abschnitt des Heizdrahts (42; 910) nicht senkrecht zu der Längsachse ausgerichtet wird.

7. Elektrische Heißsiegelvorrichtung nach Anspruch 1, bei der das Gehäuse (10) eine Längsachse definiert und bei der wenigstens ein Abschnitt des Heizdrahts (42; 910) wesentlich parallel zu der Längsachse ausgerichtet wird.

8. Elektrische Heißsiegelvorrichtung nach Anspruch 1, bei welcher der Heizdraht (42; 910) wenigstens zwei Abschnitte einschließt, die nicht parallel zueinander sind.

9. Elektrische Heißsiegelvorrichtung nach Anspruch 1, bei welcher der Heizdraht (42; 910) wenigstens zwei Abschnitte einschließt, die wesentlich senkrecht zueinander sind.

10. Elektrische Heißsiegelvorrichtung nach Anspruch 1, bei welcher der Siegelmechanismus (40) ferner eine wärmeisolierende Basis (41) einschließt, die eine obere Fläche hat, auf welcher der Heizdraht (42; 910) angeordnet wird, wobei der auf der oberen Fläche angeordnete Abschnitt des Heizdrahts (42; 910) länger ist als die Länge der oberen Fläche.

11. Elektrische Heißsiegelvorrichtung nach Anspruch 1, bei der sich die Erweiterungen (510; 904) in wesentlich entgegengesetzten Richtungen erstrecken.

12. Elektrische Heißsiegelvorrichtung nach Anspruch 11, bei der das Gehäuse (10) eine Längsachse definiert und bei der sich die Erweiterungen (510; 904) in einer Richtung wesentlich parallel zu der Längsachse erstrecken.

13. Elektrische Heißsiegelvorrichtung nach Anspruch 1, die außerdem einen Betätigungsknopf (914) umfaßt, wobei die Stromquelle elektrisch mit dem Heizdraht (42; 910) verbunden wird, wenn der Betätigungsknopf niedergedrückt wird.

14. Elektrische Heißsiegelvorrichtung nach Anspruch 13, bei welcher der Betätigungsknopf (914) in einer Position angeordnet wird derart, daß er niedergedrückt wird, wenn der Druckhebel (20) nach unten gedrückt wird.

15. Elektrische Heißsiegelvorrichtung nach Anspruch 1, bei welcher der Siegelmechanismus (40) auf- und niederbewegt werden kann, um die Stromquelle elektrisch mit dem Heizdraht (42; 910) zu verbinden.

16. Elektrische Heißsiegelvorrichtung nach Anspruch 1, bei der sich der Siegelmechanismus (40) in das erste oder das zweite Paar von Erweiterungen (510; 904) erstreckt.

17. Elektrische Heißsiegelvorrichtung nach Anspruch 1, bei welcher der Heizdraht (42; 910) wenigstens zwei horizontale Abschnitte (910a), die wesentlich parallel sind, und wenigstens zwei vertikale Abschnitte (91 0b), die wesentlich parallel sind, umfaßt und bei der die wenigstens zwei horizontalen Abschnitte und die wenigstens zwei vertikalen Abschnitte wesentlich senkrecht zueinander sind.

18. Elektrische Heißsiegelvomcbtung nach Anspruch 17, bei der das Gehäuse (10) eine Längsachse definiert und bei der wenigstens einer der wenigsten zwei horizontalen oder vertikalen Abschnitte (910a, 910b) des Heizdrabtes (910) nicht senkrecht zu der Längsachse ausgerichtet wird.

19. Elektrische Heißsiegelvorrichtung nach Anspruch 17, bei der das Gehäuse eine Längsachse definiert und bei der wenigstens einer der wenigsten zwei horizontalen oder vertikalen Abschnitte (910a, 910b) des Heizdrahtes (910) wesentlich parallel zu der Längsachse ausgerichtet wird.

20. Elektrische Heißsiegelvorrichtung nach einem der vorhergehenden Ansprüche, bei der sich die ersten Erweiterungen (510, 904) in entgegengesetzten Richtungen erstrecken und sich die zweiten Erweiterungen (510, 902) in entgegengesetzten Richtungen erstrecken und bei welcher der Siegelmechanismus ferner folgendes einschließt:
(i) eine wärmeisolierende Basis, wobei der Heizdraht an der wärmeisolierenden Basis befestigt wird, und
(ii) eine über dem Heizdraht befestigte hitzebeständige Abdecktafel.

21. Elektrische Heißsiegelvorrichtung nach Anspruch 1, bei der das Gehäuse (10) eine Längsachse hat und der Siegelmechanismus (40) einen Mittelpunkt hat, wobei der Mittelpunkt aus der Längsachse versetzt ist.

22. Elektrische Heißsiegelvorrichtung nach einem der vorhergehenden Ansprüche, die ferner eine Sicherheitsvorrichtung (71) umfaßt, die selektiv verhindert, daß elektrischer Strom durch den elektrischen Heizdraht (42; 910) fließt.

23. Elektrische Heißsiegelvorrichtung nach Anspruch 22, bei der die Sicherheitsvorrichtung einen in Reihe mit dem elektrischen Heizdraht (42; 910) angeordneten Sicherheitsschalter (71) umfaßt.

24. Elektrische Heißsiegelvorrichtung nach Anspruch 1, bei welcher der Druckhebel (20) ein schwenkbar mit dem Gehäuse verbundenes feststehendes Ende und ein freies Ende hat, an dem ein wärmeisolierender Druckblock (21) angebracht wird, wobei der wärmeisolierende Druckblock (21) gegen die wärmeisolierende Basis (41) gedrückt wird, wenn der Druckhebel niedergedrückt wird.

25. Elektrische Heißsiegelvorrichtung nach Anspruch 24, die ferner eine an dem Gehäuse (10) befestigte Einrichtung (73) umfaßt, um einen Kontakt zwischen dem Druckhebel (20) und dem Siegelmechanismus (40) zu verhindern.

26. Elektrische Heißsiegelvorrichtung nach Anspruch 1, bei welcher der Siegelmechanismus (40) auf- und niederbewegt werden kann.

27. Elektrische Heißsiegelvorrichtung nach Anspruch 1, bei welcher der Siegelmechanismus (40) ferner folgendes umfaßt:
(a) eine wärmeisolierende Basis (41) und
(b) zwei Metallpositionierplatten (43),
wobei die wärmeisolierende Basis einen vorspringenden Mittelabschnitt (44) umfaßt, wobei der elektrische Heizdraht (42) auf dem vorspringenden Mittelabschnitt der wärmeisolierenden Basis (41) angebracht wird, wobei die Metallpositionierplatten (43) an zwei gegenüberliegenden Seiten der wärmeisolierenden Basis an derselben befestigt und jeweils mit zwei entgegengesetzten Enden des elektrischen Heizdrahtes verbunden werden.

28. Elektrische Heißsiegelvorrichtung nach Anspruch 27, bei welcher der Siegelmechanismus ferner eine auf den elektrischen Heizdraht (42) gedeckte wärmeisolierende Tafel (44) umfaßt.

29. Elektrische Heißsiegelvorrichtung nach Anspruch 1, die ferner eine Einrichtung zum Schneiden eines Werkstücks umfaßt.

30. Elektrische Heißsiegelvorrichtung nach Anspruch 29, bei der die Einrichtung zum Schneiden des Werkstücks an dem Druckhebel angeordnet wird.

31. Elektrische Heißsiegelvorrichtung nach Anspruch 30, bei der die Einrichtung zum Schneiden des Werkstücks einen Knopf in Zusammenwirken mit einem Abstecher umfaßt.

32. Elektrische Heißsiegelvorrichtung nach Anspruch 31, bei welcher der Abstecher aus Keramik besteht.

33. Verfahren zum Siegeln, das die folgenden Schritte umfaßt:
(a) Bereitstellen einer elektrischen Heißsiegelvorrichtung nach einem der vorhergehenden Ansprüche,
(b) Bereitstellen eines zu siegelnden Gegenstandes,
(c) Anordnen der Siegelvorrichtung derart, daß sich der Heizdraht über einer Kante des zu siegelnden Gegenstandes erstreckt, und
(d) Siegeln des zu siegelnden Gegenstandes.

## Revendications

1. Dispositif de thermoscellage électrique, comprenant:
(a) un boîtier (10), ledit boîtier englobant une première paire d'extensions (510, 904), s'étendant vers l'extérieur;
(b) une barre de pression (20) connectée par pivotement audit boîtier, ladite barre de pression englobant une deuxième paire d'extensions (510, 902) s'étendant vers l'extérieur, ladite barre de pression étant normalement poussée au-dessus dudit boîtier,
(c) au moins un mécanisme de scellage (40) monté dans ladite barre de pression ou ledit boîtier, ledit au moins un mécanisme de scellage englobant un fil chauffant (42; 910); et
(d) une source de courant pour alimenter ledit fil chauffant.

2. Dispositif de thermoscellage électrique selon la revendication 1, dans lequel ledit mécanisme de scellage (40) est agencé dans ladite barre de pression (20).

3. Dispositif de thermoscellage électrique selon la revendication 1, dans lequel ledit mécanisme de scellage (40) est agencé dans ledit boîtier (10).

4. Dispositif de therntoscellage électrique selon la revendication 1, dans lequel un premier mécanisme de scellage est agencé dans ladite barre de pression (20), un deuxième mécanisme de scellage étant agencé dans ledit boîtier (10).

5. Dispositif de thermoscellage électrique selon la revendication 1, destiné à être alimenté en courant électrique par au moins une source de courant sélectionnée dans le groupe constitué d'une source de courant continu et d'une source de courant alternatif.

6. Dispositif de thermoscellage électrique selon la revendication 1, daras lequel ledit boîtier (10) définit un axe longitudinal, au moins une partie dudit fil chauffant (42; 910) étant orientée de manière non perpendiculaire audit axe longitudinal.

7. Dispositif de thermoscellage électrique selon la revendication 1, dans lequel ledit boîtier (10) définit un axe longitudinal, au moins une partie dudit fil chauffant (42; 910) étant orientée de manière pratiquement parallèle audit axe longitudinal.

8. Dispositif de thermoscellage électrique selon la revendication 1, dans lequel ledit fil chauffant (42; 910) englobe au moins deux sections non parallèles.

9. Dispositif de thermoscellage électrique selon la revendication 1, dans lequel ledit fil chauffant (42; 910) englobe au moins deux sections pratiquement perpendiculaires.

10. Dispositif de thermoscellage électrique selon la revendication 1, dans lequel ledit mécanisme de scellage (40) englobe en outre une base à isolation thermique (41) comportant une surface supérieure sur laquelle est agencé ledit fil chauffant (42; 910), la partie dudit fil chauffant (42; 910) agencée sur ladite surface supérieure étant plus longue que la longueur de ladite surface supérieure.

11. Dispositif de thermoscellage électrique selon la revendication 1, dans lequel lesdites extensions (510; 904) s'étendent dans des directions pratiquement opposées.

12. Dispositif de thermoscellage électrique selon la revendication 11, dans lequel ledit boîtier (10) définit un axe longitudinal, lesdites extensions (510; 904) s'étendant dans une direction pratiquement parallèle audit axe longitudinal.

13. Dispositif de thermascellage électrique selon la revendication 1, comprenant en outre un bouton d'actionnement (914), ladite source de courant étant connectée électriquement audit fil chauffant (42; 910) lorsque ledit bouton d'actionnement est enfoncé.

14. Dispositif de thermoscellage électrique selon la revendication 13, dans lequel ledit bouton d'actionnement (914) est agencé dans une position telle à être enfoncé lorsque la barre de pression (20) est pressée vers le bas.

15. Dispositif de thermoscellage électrique selon la revendication 1, dans lequel ledit mécanisme de scellage (40) peut être déplacé vers le haut et vers le bas afin d'assurer la connexion électrique de ladite source de courant audit fil chauffant (42; 910).

16. Dispositif de thermoscellage électrique selon la revendication 1, dans lequel ledit mécanisme de scellage (40) s'étend dans ladite première ou ladite deuxième paire d'extensions (510; 904).

17. Dispositif de thermoscellage électrique selon la revendication 1, dans lequel ledit fil chauffant (42; 910) comprend au moins deux sections horizontales (910a) pratiquement parallèles et au moins deux sections verticales (910b) pratiquement parallèles, lesdites au moins deux sections horizontales et lesdites au moins deux sections verticales étant pratiquement perpendiculaires les unes aux autres.

18. Dispositif de thermoscellage électrique selon la revendication 17, dans lequel ledit boîtier (10) définit un axe longitudinal, au moins une desdites au moins deux sections horizontales ou verticales (910a, 910b) dudit fil chauffant (910) étant orientée de manière non perpendiculaire audit axe longitudinal.

19. Dispositif de thermoscellage électrique selon la revendication 17, dans lequel ledit boîtier (10) définit un axe longitudinal, au moins une desdites au moins deux sections horizontales ou verticales (910a, 910b) dudit fil chauffant (910) étant orientée de manière pratiquement parallèle audit axe longitudinal.

20. Dispositif de thermoscellage électrique selon l'une quelconque des revendications précédentes, dans lequel lesdites premières extensions (510, 904) s'étendent dans des directions opposées, lesdites deuxièmes extensions (510, 902) s'étendant dans des directions opposées, ledit mécanisme de scellage englobant en outre
(i) une base à isolation thermique, ledit fil chauffant étant fixé à ladite base à isolation thermique, et
(ii) une feuille protectrice à résistance thermique fixée au-dessus du fil chauffant.

21. Dispositif de thermoscellage électrique selon la revendication 1, dans lequel ledit boîtier (10) comporte un axe longitudinal, le mécanisme de scellage (40) comportant un point central, ledit point central étant décalé dudit axe longitudinal.

22. Dispositif de thermoscellage électrique selon l'une quelconque des revendications précédentes, comprenant en outre un dispositif de sécurité (71), empêchant sélectivement l'écoulement du courant électrique à travers ledit fil chauffant électrique (42; 910).

23. Dispositif de therioaoscellage électrique selon la revendication 22, dans lequel ledit dispositif de sécurité comprend un interrupteur de sécurité (71) agencé en série avec ledit fil chauffant électrique (42; 910).

24. Dispositif de thermoscellage électrique selon la revendication 1, dans lequel ladite barre de pression (20) comporte une extrémité fixe connectée par pivotement audit boîtier, et une extrémité libre sur laquelle est monté un bloc de pression à isolation thermique (21), ledit bloc de pression à isolation thermique (21) étant poussé contre ladite base à isolation thermique (41) lorsque ladite barre de pression est abaissée.

25. Dispositif de thermoscellage électrique selon la revendication 24, comprenant en outre un dispositif (73) fixé sur ledit boîtier (10) pour empêcher un contact entre ladite barre de pression (20) et ledit mécanisme de scellage (40).

26. Dispositif de thermoscellage électrique selon la revendication 1, dans lequel ledit mécanisme de scellage (40) peut être déplacé vers le haut et vers le bas.

27. Dispositif de thermoscellage électrique selon la revendication 1, dans lequel ledit mécanisme de scellage (40) comprend en outre:
(a) une base à isolation thermique (41); et
(b) deux plaques de positionnement métalliques (43);
ladite base à isolation thermique comprenant une partie médiane en saillie (44), ledit fil chauffant électrique (42) étant monté sur ladite partie médiane en saillie de ladite base à isolation thermique (41), lesdites plaques de positionnement métalliques (43) étant fixées sur ladite base à isolation thermique au niveau des deux côtés opposés correspondants et connectées respectivement aux deux extrémités opposées dudit fil chauffant électrique.

28. Dispositif de thermoscellage électrique selon la revendication 27, dans lequel ledit mécanisme de scellage (40) comprend en outre une feuille à isolation thermique (44) recouvrant ledit fil chauffant électrique (42).

29. Dispositif de scellage selon la revendication 1, comprenant en outre un dispositif pour découper une pièce d'oeuvre.

30. Dispositif de scellage selon la revendication 29, dans lequel ledit dispositif destiné à découper ladite pièce d'oeuvre est agencé sur ladite barre de pression.

31. Dispositif de scellage selon la revendication 30, dans lequel ledit dispositif destiné à découper ladite pièce d'oeuvre comprend un bouton coopérant avec une trancheuse.

32. Dispositif de scellage selon la revendication 31, dans lequel ladite trancheuse est composée de céramique.

33. Procédé de scellage, comprenant les étapes ci-dessous:
(a) fourniture d'un dispositif de thermoscellage électrique selon l'une quelconque des revendications précédentes;
(b) fourniture d'un objet devant être scellé;
(c) positionnement dudit dispositif de scellage de sorte que ledit fil chauffant s'étend au-dessus d'un bord dudit objet devant être scellé; et
(d) scellage dudit objet devant être scellé.
